# EUROPÄISCHE PATENTSCHRIFT

(11) **EP 0 777 585 B1**
(45) Veröffentlichungstag und Bekanntmachung des Hinweises auf die Patenterteilung: **01.12.1999**
(21) Anmeldenummer: 95929716.9
(22) Anmeldetag: 25.08.1995
(51) Int. Cl.: B60H 1/08, B60H 1/00, F01P 3/20

(54) **KFZ-WÄRMETAUSCHER**
MOTOR VEHICLE HEAT EXCHANGER
ECHANGEUR DE CHALEUR POUR AUTOMOBILE

(30) Priorität: 01.09.1994 DE 4431107; 01.09.1994 DE 4431191; 01.09.1994 DE 4431192
(43) Veröffentlichungstag der Anmeldung: 11.06.1997
(73) Patentinhaber: Himmelsbach, Johann, 51789 Lindlar (DE)
(72) Erfinder: Himmelsbach, Johann, 51789 Lindlar (DE)
(74) Vertreter: Lippert, Hans-Joachim, Dipl.-Ing.
(86) Internationale Anmeldenummer: DE9501149
(87) Internationale Veröffentlichungsnummer: WO9606748

(56) Entgegenhaltungen:
- EP-A- 0 236 787
- DE-A- 4 033 261
- GB-A- 1 170 096
- US-A- 4 993 377
- US-A- 5 203 498

## Beschreibung

Die Erfindung betrifft ein Verfahren zur Beheizung der Kabine von Kraftfahrzeugen mit der Abwärme des Antriebsmotors über das flüssige oder gasförmige Kühlmittel, weiches zur Erwärmung der Fahrgastzelle in Kühlmittelleitungen über einen Kabinenwarmetauscher und dann zurück zum Motor geleitet wird, sowie eine Vorrichtung zur Beheizung von Kabinen von Fahrzeugen und einen geeigneten Kabinenwärmetauscher.

Vor dem Hintergrund ständiger Verbesserungen der Wirkungsgrade von Verbrennungsmotor, Antriebstechnik und Aerodynamik im Kraftfahrzeugbau wird anhand einfacher thermodynamischer Überlegungen sehr schnell klar, daß in Zukunft wesentlich effizienter bei der Verwendung der Abwärme aus dem Antriebsmotor für Heizzwecke, insbesondere bei der Beheizung der Fahrgastzelle, umgegangen werden muß.

Je nach Wirkungsgrad und Fahrsituation weisen bel extremen klimatischen Bedingungen bereits heute am Markt befindliche Fahrzeuge mit hocheffizienten Dieselmotoren Probleme bei der Beheizung der Kabine auf: Neben einem sehr langsamen Aufheizen von Motor und Kabine reicht im Fahrbetrieb mit geringer Last die Heizleistung auch nach längerer Fahrt oftmals nicht aus, um ein komfortables Klima in der Kabine zu erreichen.

Deshalb versuchen einige Kraftfahrzeughersteller dieses Heizleistungsdefizit durch eine zusätzliche, kraftstoffbefeuerte bzw. elektrisch beheizte Wärmequelle zu beheben, da lediglich durch Optimierung des Kühlmittelsystems eine hinreichende Heizleistung für die Kabine nicht bereit gestellt werden konnte. Dies verwundert zunächst nicht, sind doch die derzeit am Markt befindlichen Kühlmittel-/Heizsysteme das Resultat langjähriger Optimierung unter Variation von Kühlmittel-, Frischluft- und Umluftmassenströmen und unter Variation von Geometrie und Anordnung der Kabinenwärmetauscher und Regelventile.

Des weiteren können die Wärmeverluste an die Umgebung beispielsweise durch die thermische Kapselung des Motors, die Verbesserung der Isolation der Kabine, die Rückgewinnung von Wärme aus dem Abgas, durch eine Erhöhung des Umluftmassenstroms in der Kabine oder gar durch die Rückgewinnung der Warmemenge, die in der aus der Kabine in die Umgebung austretenden Luft noch enthalten ist, über einen Abluft/Frischluft-Warmetauscher, reduziert werden, so daß auf den Einsatz von zusätzlichen Heizsystemen oder zusätzlicher Heizenergie zumindest teilweise verzichtet werden kann.

Diese Maßnahmen sind jedoch mit erheblichen Zusatzkosten verbunden, was sie speziell für kleinere Fahrzeuge unattraktiv macht. Durch die geringe Masse hat aber gerade diese Fahrzeugklasse in Verbindung mit hocheffizienten Motoren bereits heute einen sehr geringen Kraftstoffverbrauch und somit auch wenig Abwarme für Heizzwecke.

Aus der DE 40 33 261 A1 ist eine Verbrennungskraftmaschine mit einer darin enthaltenen Kühlmittelleitung, die von einem flüssigen Kühlmittel durchströmbar ist, bekannt, wobei der Kühlmittelleitung zumindest ein Hilfsmittel zur Reduzierung des Kühlmittelmassenstromes zugeordnet ist. Hierdurch kann bei Verbrennungskraftmaschinen nach einer Inbetriebnahme derselben eine schnellere Erwarmung der den Brennraum berührenden Motorenbauteile auf eine optimale Betriebstemperatur erzielt werden. Die optimale Betriebstemperatur kann dabei unabhängig von der jeweiligen Belastung weitgehend gleichbleibend beibehalten werden, indem der Kühlmittelmassenstrom auf einen Kurzschluß-, einen Kühler- und/oder einen Heizungskreislauf verteilt wird. Hierbei kann gleichzeitig auch eine Regelung der Fahrzeuginnenraumtemperatur erfolgen, wozu bei Bedarf der Kühlmittelmassenstrom durch die Heizung in bekannter Weise erhöht wird. Eine Erhöhung der Heizleistung des Kabinenwärmetauschers bei optimaler Betriebstemperatur der Verbrennungskraftmaschine kann hierdurch nicht erreicht werden.

Der Erfindung liegt die Aufgabe zugrunde, für Kraftfahrzeuge mit kühlmittelbeheizter Kabine ein effizientes und kostengünstiges Verfahren zur Erhöhung des Wärmenutzungsgrades der Kabinenheizung zu schaffen, so daß möglichst wenig zusätzliche Heizenergie für die Beheizung der Kabine erforderlich ist, wobei zugleich möglichst wenig Änderungen an bestehenden Fahrzeugkomponenten vorzunehmen sind.

Darüber hinaus soll eine Vorrichtung zur Beheizung von Kabinen von Fahrzeugen geschaffen werden, die möglichst einfach und kostengünstig herstellbar und einsetzbar ist, sowie ein geeigneter Wärmetauscher zur Verfügung gestellt werden.

Die Aufgabe wird erfindungsgemäß dadurch gelöst, daß ein Kabinenwärmetauscher mit Gegenstromcharakteristik verwendet wird und daß bei Unterschreitung der Solltemperatur in der Fahrgastkabine der Kühlmittelmassenstrom durch den Antriebsmotor und/oder den Kabinenwärmetauscher unter Steigerung der an die Fahrgastkabine abgegebenen Heizleistung zumindest zeitweise in Richtung auf ein durch die zulässigen Grenzwerte der Motorkühlung bestimmtes Maß reduziert wird, bis die Solltemperatur in der Fahrgastkabine erreicht wird. Die Vorrichtung zur Beheizung von Kabinen von Fahrzeugen sowie der hierzu geeignete Wärmetauscher sind gemäß den Merkmalen der unabhängigen Ansprüche erfindungsgemäß weitergebildet. Vorteilhafte Ausführungsformen sind jeweils in den Unteransprüchen beschrieben.

Die Grenzwerte der Motorkühlung und damit die der potentiellen Reduktion des Kühlmittelmassenstromes sind bekanntermaßen durch den maximal zulässigen Druck bzw. die maximal zulässige Temperatur im Kühlsystem, die vom Motor abzuführende Wärmemenge, die Umgebungstemperatur, die Temperatur des Kühlmittels beim Eintritt in den Motor sowie die spezifische Wärmekapazität des Kühlmittels festgelegt.

Bei herkömmlichen Querstrom-Kabinenheizsystemen beträgt zwecks Optimierung hinsichtlich Temperaturverteilung im Motor, Temperatur der Brennraumwände, Strömungsgeschwindigkeit des Kühlmittels sowie hinsichtlich der Wärmeübertragungsleistung an die Kabinenluft der Kühlmittelmassenstrom durch den Motor unabhängig von der in der Kabine erforderlichen Heizleistung, in vielen Betriebssituationen ein Vielfaches, oftmals mehr als das Zehnfache, des für die Motorkühlung erforderlichen Wertes. Dies gilt auch für die Kühlmittelmassenströme durch den Kabinenwärmetauscher bei geschlossenem Thermostaten im winterlichen Fahrbetrieb.

Darüber hinaus herrscht in der Fachwelt Einigkeit darüber, daß ab einer bestimmten Grenze weder eine Erhöhung des Kühlmittelmassenstromes noch der Wärmetauscherfläche eine merkliche Verbesserung der Heizleistung in der Kabine bewirkt. Die Lufttemperatur am Kabinenwärmetauscheraustritt ist in der "Sättigung".

Die erfindungsgemäße Reduktion des Kühlmittelmassenstromes durch Motor und/oder Kabinenwärmetauscher ist in Verbindung mit einem Gegenstrom-Kabinenwärmetauscher jedoch überaus zweckmäßig, da zusätzlich zum Wärmeübergang zwischen Motor und Kühlmittel, Kühlmittel und Kabinenwärmetauscherberippung sowie Kühlmittelwärmetauscherberippung und Kabinenluft auch die Verluste an die Umgebung zu berücksichtigen sind, was bisher nicht erfolgt ist.

Bei den bisher bekannten Kabinenheizsystemen mit Querstromkabinenwärmetauschern liegen teilweise Differenzen der Kühlmitteltemperaturen am Motorein- und -austritt von weniger als 10 K vor. Das gleiche gilt bei warmem Motor auch am Kabinenwärmetauscher. Dabei kann die Temperaturdifferenz zwischen Motorein- und -austritt bei Kühlmittelsystemen mit parallel zum kleinen Kühlmittelkreislauf liegendem Kabinenwärmetauscher noch wesentlich geringer sein.

Dies begründet die bisherige Auffassung, daß ein Gegenstrom-Kabinenwärmetauscher kaum Vorteile bringt, da hier die Lufttemperatur am Austritt aus dem Kabinenwärmetauscher nahe der "Sättigung" liegt, d.h. die Lufttemperatur fast so hoch ist, wie die Kühlmitteltemperatur. So kann bei kühlmittelseitigem Temperaturabfall von 10 K bei einem Gegegenstrom- anstelle eines Querstrom-Kabinenwärmetauschers lediglich mit einer Erhöhung der Lufttemperatur am Wärmetauscheraustritt in der Größenordnung von 5 K gerechnet werden. Dies rechtfertigt die deutlich höheren Kosten der Gegenstrombauart in Kraftfahrzeuganwendungen nicht. Darüber hinaus treten unnötig hohe Wärmeverluste in den vom Kabinenwärmetauscher zum Motor zurückführenden Kühlmittelleitungen, in der Kühlmittelpumpe und im Kurbelgehäuse des Motors auf. Speziell das Kurbelgehäuse gibt nicht nur über eine große Fläche Wärme ab, sondern hat zusätzlich an der Motoraufhängung und den angeflanschten Kompanenten noch weitere "Wärmebrücken".

Wird jedach erfindungsgemäß gleichzeitig der Kühlmittelmassenstrom z.B. um den Faktar 5 reduziert, so erhöht sich der Temperaturabfall am Kabinenwärmetauscher von 10 K auf 50 K, während sich die Luftaustrittstemperatur kaum ändert, d.h. es liegt zunächst eine unveränderte Heizleistung in der Kabine vor. Die Wärmeverluste auf dent Strömungsweg vom Kabinenwärmetauscher-Austritt zum Motor sind hierdurch jedoch drastisch reduziert. Eine zusätzliche Verbesserung der Isolierung der zum Kabinenwärmetauscher führenden Kühlmittelleitung und/oder deren Querschnittsreduzierung, weiche bei reduziertem Kühlmittelmassenstrom problemlos möglich ist, führt zu einer weiteren Reduktion der Wärmeverluste an die Umgebung, Die zum Motor zurückführende Kühlmittelleitung ist in diesem Zusammenhang aufgrund des reduzierten Temperaturniveaus von untergeordneter Bedeutung.

Wesentlich ist nun für das erfindungsgemäße Verfahren, daß aufgrund der Reduktion der Wärmeverluste an die Umgebung in Verbindung mit der unveränderten Abwärme aus dem Verbrennungsprozeß eine Erhöhung der Motoraustrittstemperatur des Kühlmittels erfolgt und hierdurch auch die Heizleistung des Kabinenwärmetauschers deutlich erhöht ist, da diese - unabhängig vom Kühlmittelmassenstrom - in erster Näherung direkt proportional zur Kühlmitteleintrittstemperatur ist, solange Systeme betrachtet werden, bei denen die Kabinenluft temperaturseitig in die "Sättigung" geht. Eine Temperaturerhöhung im Bereich des Zylinderkopfes und in der turn Kabinenwärmetauscher führenden Kühlmittelleitung wird durch die Reduktion der Verluste bel weitem überkompensiert. Letztlich ist der Temperaturabfall am Kabinenwärmetauscher durch die Reduktion des Kühlmitteldurchsatzes um den Faktor 5 nicht von 10 auf 50 K angestiegen, sondern beispielsweise von 10 auf 60 K.

Negative Auswirkungen des erfindungsgemäßen Verfahrens auf den Verbrennungsprozeß bzw. die Schadstoffemissionen des Motors sind nicht zu erwarten. Im Gegenteil, in unmittelbarer Nähe der Brennraumwände liegt eine höhere Kühlmitteltemperatur vor als bel der Ausgangsanordnung.

Mittels des erfindungsgemäßen Verfahrens ist nicht nur eine Steigerung der maximalen Heizleistung unter extremer Winterkälte, sondern in vielen Fahrsituationen mit Kabinenbeheizung auch eine Verkürzung der Aufheizdauer des Motors zu erzielen.

Es ist jedoch nicht immer zweckmäßig, möglichst viel Heizleistung auf die Kabine zu konzentrieren. Bei geringem Heizleistungsbedarf kann die erfindungsgemäße Reduktion des Kühlmittelmassenstromes eine zu hohe Kühlmittelaustrittstemperatur aus dem Motor bedingen, was zu folgenden unerwünschten Effekten führen kann:
- lokale Überhitzung innerhalb des Motors, Dampfblasenbildung,
- überhöhte Wärmeverluste an die Umgebung durch hohe Kühlmitteltemperatur im gesamten Kühlmittelkreislauf,
- drastisch erhöhte Wärmeverluste an die Umgebung durch Öffnen des Thermostaten für den großen Kühlmittelkreislauf,
- unnötige Erhöhung der Pumpleistung der Kühlmittelpumpe.

In derartigen Betriebszuständen ist es zweckmäßig, die Reduktion des Kühlmittelmassenstromes ganz oder zumindest teilweise aufzuheben.

Zur Definition bzw. zur Erfassung des Zeitpunktes, ab weichem die Konzentration der Abwärme auf die Kabine nicht mehr zweckmäßig ist, sind unterschiedliche Regelstrategien denkbar. Mittels eines manuell zu betätigenden Schalters kann z.B. im Winter die Option "Maximale Heizleistung" über ein Ventil im Kühlmittelkreislauf eingestellt werden. Es kann aber auch eine automatische Festlegung des Kühlmittelmassenstromes durch Schalt- oder Regelventile erfolgen, die beispielsweise beim Überschreiten einer bestimmten Umgebungstempereatur aktiviert werden. Desweiteren kann der Lastzustand des Motors mittels Schaltungen erfaßt und die Reduktion des Kühlmittelmassenstromes beim Überschreiten einer Grenzlast oder einer Grenzdrehzahl, beispielsweise Überschreiten von 2/3 der Nenndrehzahl oder 2/3 des Nenndrehmomentes, aufgehoben werden. Diese Maßnahme wird zweckmäßigerweise parallel zur Erfassung des Heizbedarfs, beispielsweise über die Kühlmitteltemperatur oder die Umgebungstemperatur, angewandt. Da die angesprochenen Meß- bzw. Regelgrößen für die Motorregelung ohnehin erfaßt werden müssen, bietet sich hier eine Einbindung ins Motormanagement an.

Eine weitere Regelstrategie ist z.B. die Erfassung der Temperaturdifferenz des Kühlmittels zwischen Motoraus- und -eintritt. Durch die Erfassung dieser Größe kann beispielsweise vermieden werden, daß überhöhte mechanische Spannungen durch Temperaturgradienten im Motorblock entstehen. Indirekt kann durch das Abschalten ab einer vorgebenen Temperaturdifferenz auch eine zu hohe Temperatur im Motor verhindert werden.

Das Überhitzen des Motors bzw. das Öffnen des Thermostaten für den großen Kühlmittelkreislauf kann durch Messung der Kühlmitteltemperatur am Motoraustritt, des Dampfdrucks im Kühlmittel oder durch die Erfassung der Druckpulsation im kleinen Kühlkreislauf vermieden werden. In der einfachsten Ausgestaltung ist die Reduktion des Kühlmittelmassenstromes aufzuheben, sobald die angesprochenen Meßgrößen einen Grenzwert überschreiten. Es sind aber auch feinfühligere Anwendungen mit Regelung des Kühlmittelmassenstromes denkbar.

Zur Erzielung hoher Heizleistungssteigerungen ist es zweckmäßig, den Kühlmittelmassenstrom möglichst stark zu reduzieren. Im Extremfall kann so die Austrittstemperatur des Kühlmittels aus dem Gegenstromkabinenwärmetauscher nahe der Umgebungstemperatur liegen, wodurch sich die geringsten Wärmeverluste an die Umgebung ergeben. Hierzu ist es zweckmäßig, den Kühlmittelmassenstrom in Abhängigkeit von der Kühlmitteltemperatur am Wärmetauscheraustritt oder der Differenz zur Umgebungstemperatur zu regein. Wie groß diese Temperaturdifferenz zur Umgebungstemperatur oder das absolute Temperaturniveau letztendlich sind, hängt davon ab, ob eine zusätzliche Kontrolleinheit zur Überwachung des Motors auf lokale Überhitzung vorhanden ist. Bei Einhalten eines gewissen Sicherheitsabstandes kann u.U. auf diese verzichtet werden, so daß sich entsprechende Kosten einsparen lassen.

Mit dem Absenken der Kühlmitteltemperatur am Motoreintritt ist neben den thermischen Spannungen auch auf die erforderliche Öltemperatur zu achten. Diese ist aus energetischen Gründen von Bedeutung sowie um erhöhten Verschleiß zu vermeiden. Deshalb kann es vorteilhaft sein, einen Teil der erhöhten Kühlmitteltemperatur am Motoraustritt gezielt zur Beheizung des Motoröls einzusetzen. Hierzu ist ein Ölwärmetauscher im Bereich des Kühlmittelaustritts zweckmäßig.

Wie eine vollständige Energiebilanz am Kraftfahrzeug zeigt, ist die erfindungsgemäße Reduktion des Kühlmittelmassenstromes durch Motor und Kabinenwärmetauscher in Verbindung mit einem Gegenstrom-Kabinenwarmetauscher eine sehr effektive Maßnahme, um die Heizleistung in der Kabine - auf dem Umweg über die Reduktion der Warmeverluste an die Umgebung - zu steigern, wobei aber auch bei Reduzierung des Kühlmittelmassenstromes lediglich durch den Motor bereits eine deutliche Verbesserung der Kabinenheizleistung unter Reduzierung der Verluste an die Umgebung möglich ist, da hierdurch die Kühlmitteltemperatur auf einen erhöhten Wert ansteigt. Dies führt zu einem nahezu linearen Anstieg der für das Kraftfahrzeug genutzten Kabinenheizleistung. Eine potentielle Erhöhung der Verluste der Vorlaufleitung nun Kabinenwärmetauscher an die Umgebung wird durch den erhöhten Wärmeentzug aus dem Kühlmittel, der sich sowohl aus der Erhöhung der Vorlauftemperatur als auch durch die Gegenstromanordnung ergibt, kompensiert, wobei durch Verkleinerung des Durchmessers der Vorlaufleitung die Warmeverluste weiter verkleinert werden können.

Wie bereits beschrieben, befindet sich beim erfindungsgemäßen Verfahren die Lufttemperatur am Austritt aus dem Kabinenwärmetauscher auf einem erhöhten Niveau, was mit einer Steigerung der Heizleistung des Kabinenwärmetauschers gleichzusetzen ist.

Der Komfort in der Kabine ist aber nicht durch die Heizleistung des Kabinenwärmetauschers, sondern maßgeblich durch die Temperatur und die Luftfeuchtigkeit in der Kabine bestimmt. Als Zielwert für die Lufttemperatur in der Kabine sind bei winterlichen Temperaturen etwa 20 - 30 °C anzusehen, was für Fahrzeuge ohne Umluft bedeutet, daß der gesamte Luftmassenstrom die Kabine mit dieser Temperatur verläßt. Bei einer Umgebungstemperatur von -20 °C und einer Lufttemperatur am Austritt des Kabinenwärmetauschers von +50 °C bedeutet eine Ablufttemperatur von +25 °C, einen Wärmenutzungsgrad in der Kabine von 35,7%.

Bei unverändertem Luftmassenstrom bedeutet z.B. die mit Hilfe der erfindungsgemäßen Reduktion der Wäsmeverluste sicher mögliche Anhebung der Lufttemperatur am Kabinenwärmetauscheraustritt von 50 °C auf 60 °C nicht nur eine Steigerung der Heizleistung des Kabinenwärmetauschers um 14,3 %, sondern es eröffnet sich durch die entsprechende Reduktion des Frischluftmassenstroms zusätzlich ein Verbesserungspotential des Wärmenutzungsgrades in der Kabine auf 43,8 %. Trotz einer gesteigerten Kabinenheizleistung wird bei entsprechender Reduktion des Frischluftmassenstroms somit immer noch weniger Wärme aus dem Motorkühlkreislauf entzogen, als bei heute üblichen kühlmittelbeheizten Fahrzeugkabinen. Diese Einsparungen wirken sich über eine entsprechende Erhöhung der Rücklauftemperatur des Kühlmittels zum Motor wiederum auf die Motoraustrittstemperatur aus und diese wieder auf die Effizienz des Kabinenwärmetauschers etc.

Der Spielraum für derartige Maßnahmen ist durch die maximal zulässige Kühlmitteltemperatur sowie durch den erforderlichen Mindestluftdurchsatz durch die Kabine begrenzt. Dieser richtet sich bei heutigen Kraftfahrzeugen in erster Linie nach der erforderlichen Geschwindigkeit bzw. dem Austrittsimpuls der Luft an den Düsen, um die Fenster vor dem Beschlagen zu schützen, dem erforderlichen Massenstrom, um die Luftfeuchtigkeit abzutransportieren, die von den Fahrgästen herrührt, sowie dem Luftmassenstrom, um dem Kühlmittel hinreichend Wärme für die Kabine zu entziehen. Weiterhin bestimmen Geräuschprobleme und die bei zu hoher Geschwindigkeit als "Zug" empfundene Luftströmung den Massendurchsatz.

Die potentielle Reduktion des Frischluftmassenstroms in Verbindung mit der erfindungsgemäßen Reduktion des Kühlmittelmassenstromes durch den Motor bzw. durch den Gegenstromwärmetauscher ist unter der Berücksichtigung dieser Randbedingungen in erster Linie durch die Gefahr des Beschlagens der Windschutzscheibe begrenzt. Speziell durch die hohen Temperaturen der Luft am Düsenaustritt der Windschutzscheibenentfrostung wird der Effekt der geringeren Luftgeschwindigkeit bzw. des geringeren Luftmassenstroms aber weitgehend kompensiert. Bei Systemen mit Umluft kann auch eine Anpassung der Austrittsgeschwindigkeit der Luft zur Vermeidung des Beschlagens der Windschutzscheibe erfolgen.

Unter Berücksichtigung der im praktischen Fahrbetrieb zu erwartenden Bereiche für Temperatur und Feuchte der Umgebungsluft und unter Berücksichtigung des Anteils der Luftfeuchtigkeit, der von den Fahrzeuginsassen stammt, läßt sich zeigen, daß die kritischen Zustände "zu hohe Feuchtigkeit der Kabinenluft" und "zu geringe Temperatur der Kabinenluft" zumindest bei warmem Motor normalerweise nicht gleichzeitig auftreten.

Bei extrem tiefen Temperaturen, wo z.T. bereits bisher bekannte Fahrzeuge Heizprobleme haben, ist die Feuchtigkeit der Umgebungsluft so gering, daß nach deren Aufheizen auf eine Temperatur von +25 °C in der Kabine auch bei Reduktion des Frischluftmassenstroms nicht mit dem Beschlagen der Scheiben zu rechnen ist. Umgekehrt ist für Umgebungstemperaturen um 0 °C zwar die Gefahr des Beschlagens deutlich größer, doch reicht dort i.a. die verfügbare Heizleistung ohne besondere Maßnahmen aus, um eine angenehme Kabinentemperatur sicherzustellen. Zur Erfüllung extremer Wärmeanforderungen in der Kabine bei tiefen Umgebungstemperaturen ist es daher zweckmäßig, den Frischluftdurchsatz durch den Kabinenwärmetauscher zu reduzieren. Außer manuellen Betätigungseinrichtungen sind hierzu automatische Stellglieder besonders geeignet, die den Frischluftdurchsatz bei Unterschreiten einer bestimmten Umgebungstemperatur oder beim Unterschreiten einer bestimmten Feuchtigkeit der Umgebungsluft reduzieren. Ebenso kann natürlich auch die relative Luftfeuchtigkeit in der Kabine als Signal für die Reduktion des Frischluftdurchsatzes Verwendung finden.

Weitere vorteilhafte Ausführungen des erfindungsgemäßen Verfahrens ergeben sich aus den Unteransprüchen. So kann beispielsweise bei Kraftfahrzeugen mit Elektromotor als Antrieb ein Teil der Heizleistung aus der Regelung der elektrischen Antriebsenergie stammen.

Oftmals weisen Kraftfahrzeuge für eine zusätzliche Beheizung der Fahrzeugkabine Zusatzheizungen auf. In diesen Fällen ist die Zusatzwärme in erster Linie auf die Fahrzeugkabine zu konzentrieren, wobei dies möglichst effizient und kostengünstig, d. h. mit möglichst wenig zusätzlicher Heizenergie aus nicht dem Fahrzeugantrieb dienenden Quellen erfolgen soll, wobei die Aufheizdauer des Motors nach Möglichkeit zu reduzieren und möglichst wenig Änderungen an bestehenden Fahrzeugaufbauten vorzunehmen sind.

Durch Integration der zusätzlichen Wärmequelle in das erfindungsgemäße Verfahren sowie unter Berücksichtigung der bevorzugten Ausführungsformen ist eine besonders effektive Nutzung der Heizleistung der zusätzlichen Wärmequelle möglich.

Bei bisher bekannten Kabinenheizsystemen mit Querstromwärmetauscher erfolgt ohne Einschalten der Zusatzheizung eine mehr oder weniger große Abnahme der Kabinenheizleistung bei Reduktion des Kühlwassermassenstroms. Diese Reduktion führt zunächst zu einer geringfügigen, dann zu einer überproportionalen Absenkung der Austrittstemperatur aus dem Kabinenwärmetauscher, wobei im Gegenzug die Motoraustrittstemperatur des Kühlmittels ansteigt, wodurch die Abnahme der Kabinenheizleistung teilweise kompensiert wird. Über die erhöhte Motortemperatur nehmen die Verluste an die Umgebung stark zu, so daß für eine wirksame Kabinenheizung der bisher bekannten Art ein relativ großer Kühlmitteldurchsatz durch den Kabinenwärmetauscher erforderlich ist. Das Einbringen zusätzlicher Wärme über eine zusätzliche Wärmequelle zwischen Motoraustritt und Kabinenwärmetauscher führt bei einem derartigen Kühlmittelsystem mit hohem Kühlmitteldurchsatz somit nur zu einer geringfügigen Steigerung der Kühlmitteltemperatur und der in der Kabine wirksamen Heizleistung. Erst über die allmähliche Steigerung der Motortemperatur, die aufgrund hoher Wärmeverluste an die Umgebung sehr ineffizient ist, ergibt sich letztlich eine spürbare Steigerung der Kabinenheizleistung. So gelangen zum Teil nur 50 % der zusätzlich durch die Zusatzheizung eingebrachten Leistung über den Heizungswärmetauscher in die Kabine.

Ist die Verbrennungsmotorabwärme geringer als die über die Zusatzheizung eingespeiste Wärme, so ist die Zweckmäßigkeit der erfindungsgemäßen Reduktion des Kühlmittelmassenstroms offensichtlich: Wird beispielsweise bei einer Motorabwärme von 1 kW der Kühlmittelmassenstrom durch den Kabinenwärmetauscher derart reduziert, daß nach Einbringen von 4 kW Zusatzheizleistung nahezu die Siedetemperatur des Kühlmittels erreicht wird, so resultiert bei dem erfindungsgemäßen Verfahren eine sehr geringe Kühlmittelaustrittstemperatur aus dem Kabinenwärmetauscher, wobei nahezu die gesamte Zusatzwärme sowie die erforderliche Motorkühlleistung von 1 kW für die Kabine genutzt werden. Diese Konstellation ist insbesondere bei Elektrofahrzeugen gegeben, bei denen mittels des erfindungsgemäßen Verfahrens neben der Abwärme des Motors ggfs. auch die Abwärme aus der Leistungsregelung genutzt wird.

Mittels des erfindungsgemäßen Verfahrens ist somit - ausgehend von einem reduzierten Grundniveau der Motorein- und Austrittstemperatur - bei reduziertem Kühlmittelmassenstrom mittels der Zusatzheizung eine Anhebung der am Kabinenwärmetauscher verfügbaren Kühlmitteltemperatur um einen bestimmten Betrag notwendig. Dies erfordert, verglichen mit bisher bekannten Verfahren, eine nur moderate Steigerung der Kühlmitteltemperatur am Eintritt in den Kabinenwärmetauscher. Dementsprechend ist zur Einhaltung einer vorgegebenen Heizleistung am Kabinenwärmetauscher verglichen mit bisher bekannten Verfahren eine geringere Kühlmitteltemperatur am Motoraustritt erforderlich. Hierdurch kann das Verhältnis der Wärmeverluste über die Oberfläche von Motor und Kühlmittelleitungen an die Umgebung verglichen mit der nicht angehobenen Wärmeleistung am Kabinenwarmetauscher gegenüber einer Ausführungsform ohne Zusatzheizung drastisch reduziert werden. Letztlich kann somit trotz unveränderter Kabinenheizleistung die Leistung der Zusatzheizung zurückgenommen werden.

Auch bei Motoren mit Bypass im Kühlmittelkreislauf ergibt die erfindungsgemäße Reduktion des Kühlmitteldurchsatzes durch Zusatzheizung und Kabinenwärmetauscher eine signifikante Verbesserung. Da sich jedoch aufgrund der Mischung zwischen dem durch die Bypassleitung geförderten Kühlmittelstrom mit dem aus dem Kabinenwarmetauscherzweig stammenden Kühlmitteistrom eine Mischtemperatur am Motoreintritt auf erhöhtem Niveau einstellt, sind die Vorteile gegenüber herkömmlichen Verfahren in diesem Falle etwas geringer.

Wie bereits beschrieben, basiert das erfindungsgemäße Verfahren auf einer signifikanten Reduktion der Wärmeverluste an die Umgebung. Wird die vom Motor zum Kabinenwärmetauscher sowie die vom Kabinenwärmeaustauscheraustritt zum Motor führende Kühlmittelleitung zusätzlich isoliert und/oder deren Querschnitt reduziert, was bei reduziertem Kühlmitteldurchsatz meist problemlos möglich ist, führt dies zu einer weiteren Reduktion der Wärmeverluste an die Umgebung.

Die erfindungsgemäße Reduktion des Külmitteldurchsatzes durch Zusatzheizung und Kabinenwärmetauscher bzw. durch Motor, Zusatzheizung und Kabinenwärmetauscher, weiche wie bereits erwähnt über Ventile steuerbar oder auch durch die konstruktive Ausgestaltung der Leitungsquerschnitte vorgenommen werden kann, stellt somit eine sehr effektive Maßnahme dar, um die Heizleistung in der Kabine durch Reduktion der Wärmeverluste an die umgebung zu steigern. Insbesondere wird hierbei beim Einsatz von Stellgliedern (Ventile oder schaltbare Drosseln) die Wärmeleistung der Zusatzheizung bei Bedarf auf die Fahrgastkabine konzentriert, was letztlich zu einer Erhöhung der Temperatur der ins Fahrzeuginnere geförderten Frischluft führt.

Wärmetauscheranordnungen zur Beheizung der Kabine von Kraftfahrzeugen mit der Abwärme des Antriebsmotors über ein Kühlmedium, bei denen das Kühlmedium zur Erwärmung der Fahrgastkabine über einen Kabinenwärmetauscher mit der Kabinenluft in Wärmeaustausch gebracht wird, sind bekannt.

Es besteht jedoch insbesondere nach dem oben gesagten das Bedürfnis nach einer effizienten und kostengünstigen Beheizung der Kabinenluft unter Reduzierung der Wärmeverluste an die Umgebung sowie nach einem verringerten Einbauvolumen und - gewicht. Insbesondere soll eine derartige Wärmetauscheranordnung möglichst wenig Änderungen an bestehenden Fahrzeugkomponenten bedingen und gegebenenfalls gegen herkömmliche Wärmetauscheranordnungen einfach austauschbar oder aus deren Komponenten leicht herstellbar sein.

Ein derartiger Wärmetauscher ist durch die Merkmale des Anspruchs 39 gekennzeichnet, wobei die nachfolgenden Unteransprüche vorteilhafte Ausführungsformen beschreiben. Insbesondere in Verbindung mit dem erfindungsgemäß beanspruchten Verfahren sowie mit der Vorrichtung zur Durchführung des Verfahrens ist die erfindungsgemäße Wärmetauscheranordnung vorteilhaft einsetzbar.

So erlaubt die drastische Reduzierung des Kühlmittelmassenstromes durch den Kabinenwärmetauscher gemäß dem erfindungsgemäßen Verfahren bei unverändertem Druck der Kühlmittelpumpe und entsprechender Ausgestaltung der an den Wärmeübertragungsrohren vorgesehenen Kühlrippen wesentlich geringere Strömungsquerschnitte der Wärmetauscherrohre als auch geringere Querschnitte der Kühlmittelleitungen vor und hinter dem Kabinenwärmetauscher. Gleichzeitig weist die erfindungsgemäße Wärmetauscheranordnung aufgrund der Gegenstromcharakteristik einen wesentlich besseren Wärmeübergang auf, so daß die Anzahl der Wärmeübertragungsrippen reduziert werden kann. Insgesamt ist somit sowohl die Masse des Wärmetauschers als auch die Masse der Kühlmittelleitungen aufgrund eines verringerten Umfanges sowie einer geringeren Wandstärke, als auch die des Kühlmittels reduzierbar. Hierdurch kann das Ansprechverhalten der Kabinenheizung verbessert werden. Desweiteren ist durch die aus dem erfindungsgemäßen Kabinenheizsystem resultierende Reduktion der Wärmeverluste von den Schlauchleitungen an die Umgebung, weiche durch geeignete Einbindung in den Kühlkreislauf des Motors noch verbesserbar ist, von Bedeutung. Diese Reduktion bezieht sich sowohl auf die verringerte Oberfläche der Schlauchleitungen als auch insbesondere auf die reduzierte Temperatur der vom Kabinenwärmetauscher zum Motor zurückführenden Kühlmittelleitungen. Insbesondere durch Erhöhung des Druckes der Kühlmittelförderpumpe und des Druckverlustes am Kabinenwärmetauscher sind die Wärmeverluste an der Kühlmittelpumpe und am Kurbelgehäuse des Motors verringerbar.

Vorteilhafterweise ist der Kühlmitteldurchsatz durch den Kabinenwärmetauscher im Vergleich zu den heute üblichen Werten in der Größenordnung von 50 % und mehr reduziert, insbesondere beträgt der Kühlmitteldurchsatz bei dem heute üblichen Wasser-Glycolgemisch bei geringer Motordrehzahl und einer Umgebungstemepratur von -20 °C weniger als 1 l/min pro kW an die Kabinenluft abgegebene Heizleistung. Vorteilhafterweise ist der Innendurchmesser der am Kabinenwärmetauscher angeschlossenen Kühlmittelleistung bei PKWs geringer als 11 mm.

Eine Vorrichtung zur Durchführung des Verfahrens ist erfindungsgemäß dadurch gekennzeichnet, daß als Gegenstromwärmetauscheranordnung eine Reihenschaltung von mindestens 3 Querstromwärmetauschern eingesetzt wird, wobei die Kabinenluft in mindestens 3 Stufen erwärmt und das Kühlmittel über diese drei Stufen abgekühlt wird.

Die Erfindung ist im folgenden beispielhaft erläutert und anhand der Figuren beispielhaft veranschaulicht. Es zeigen:
- Fig. 1: eine schematische Darstellung einer erfindungsgemäßen Vorrichtung mit Gegenstromwärmetauscher und luftseitiger Regelung,
- Fig. 2: eine schematische Darstellung einer erfindungsgemäßen Vorrichtung mit Gegenstromwärmetauscher mit kühlmittelseitiger Regelung,
- Fig. 3: eine schematische Darstellung einer erfindungsgemäßen Vorrichtung mit Gegenstromwärmetauscher und wasserseitigem Bypass,
- Fig. 4: eine schematische Darstellung einer weiteren Ausführungsform der erfindungsgemäßen Vorrichtung mit Gegenstromwärmetauscher,
- Fig. 5: eine schematische Darstellung einer erfindungsgemäßen Vorrichtung mit über eine Drosselstelle verschließbarem Bypass,
- Fig. 6: eine schematische Darstellung einer erfindungsgemäßen Vorrichtung mit Gegenstromwärmetauscher und Zusatzheizung,

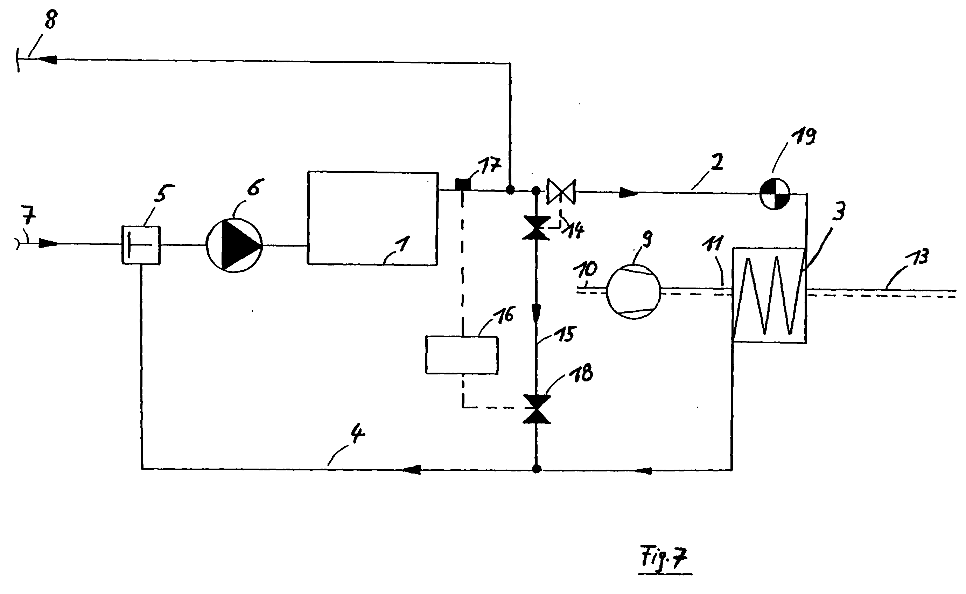

- Fig. 7: eine weitere Ausführungsform mit Zusatzheizung,
- Fig. 8: eine schematische Darstellung eines Wärmetauschers nach dem Gegenstromprinzip (8a) und eines herkömmlichen Wärmetauschers nach dem Querstromprinzip (8b),
- Fig. 9: eine weitere Ausführungsform eines Wärmetauschers nach dem Gegenstromprinzip,
- Fig.10: eine schematische Darstellung einer Wärmetauscheranordnung mit Gegenstromwärmetauscher.

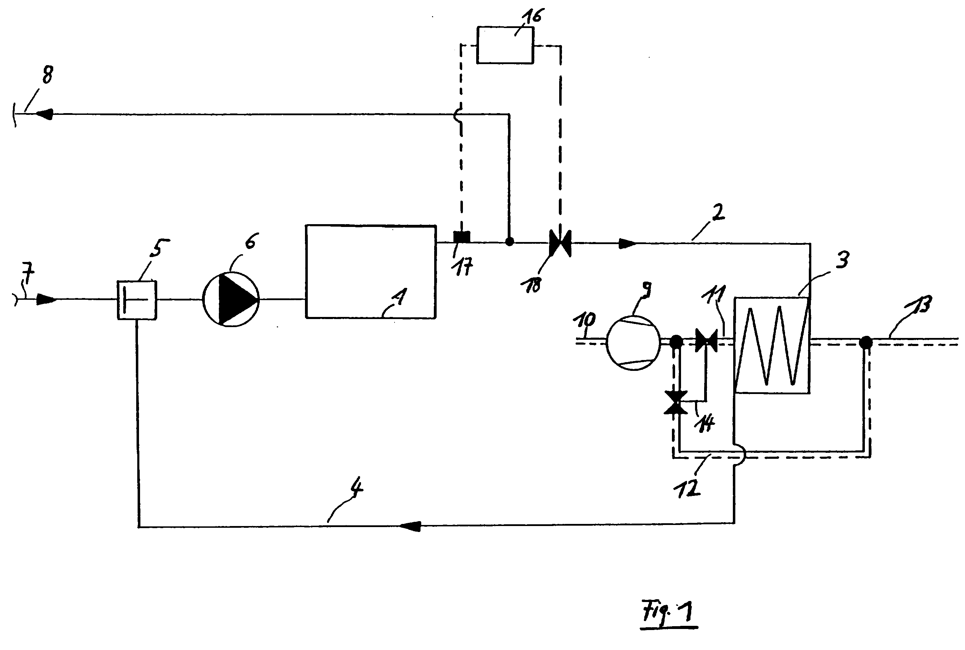

In der in Fig. 1 gezeigten Anordnung mit luftseitiger Regelung der Kabinentemperatur wird das flüssige Kühlmittel vom Motor 1 über die Vorlaufleitung 2 zum Kabinenwärmetauscher 3 und dann über die Rücklaufleitung 4, den Thermostaten 5 und die Kühlmittelpumpe 6 zurück zum Motor 1 gefördert. Hierbei ist zu beachten, daß der Themostat 5 den großen Kühlkreislauf - hier angedeutet durch die Leitungen 7 und 8 - weitgehend verschließt, solange keine überschüssige Abwärme vorhanden ist.

Die Regelung der an die Kabine abgegebenen Wärme erfolgt durch die Anpassung der mit Hilfe des Gebläses 9 von der Leitung 10 durch die Leitung 11 über den Kabinenwärmetauscher 3 und die Leitung 13 in die Kabine geförderten Frischluftmasse. Hierbei ergibt sich die Temperatur der über zahlreiche Düsen in die Kabine geförderten Luft als Mischtemperatur der über die Regelklappe 14 auf die Leitungen 11 und 12 verteilten Luftmassen. Bei manchen Anwendungen sitzt die Regelklappe auch hinter dem Kabinenwärmetauscher.

In erfindungsgemäßer Weiterentwicklung des Heizungskreislaufs ist der Kabinenwärmetauscher 3 als Gegenstromwärmetauscher mit schaltbarer Drosselstelle 18 vorgesehen, wobei die Betätigung der Drosselstelle manuell oder automatisch bzw. schaltbar oder regelbar sein kann. Hierzu kann beispielsweise der Sensor 17 in Verbindung mit der Elektronik 16 verwendet werden. Wesentlich ist nun, daß die Drosselung des Kühlmitteldurchsatzes mit Hilfe der Drosselstelle 18 nicht mit der Zielsetzung vorgenommen wird, die Heizleistung in der Kabine zu reduzieren, sondern daß die Drosselung zur Steigerung der in der Kabine wirksamen Heizleistung verwendet wird. Mit anderen Worten: "Drossel geöffnet" bedeutet reduzierte Heizleistung in der Kabine aber wärmerer Motorblock; "Drosselung wirksam" bedeutet erhöhte Heizleistung in der Kabine aber kälterer Motorblock, wobei der Bereich der Brennraumwände dennoch für beide Stellungen der Drossel warm bleibt.

Die Feinregulierung bei reduziertem Heizleistungsbedarf muß hierbei berücksichtigen, daß der Thermostat 5 für den großen Kühlmittelkreislauf nicht durch einen zu starken Anstieg der Kühlmitteltemperatur geöffnet wird. Deshalb setzt die Regelung in einer besonders zweckmäßigen Ausgestaltung des erfindungsgemäßen Verfahrens bei Erreichen einer genau definierten Obergrenze der Kühlmittemperatur die Drosselung des Kühlmitteldurchsatzes zurück.

In Fällen, in denen nur das Heizleistungsdefizit in der Kabine unter extremen klimatischen Bedingungen behoben werden soll und ansonsten ein möglichst effizienter Umgang mit der verfügbaren Abwärme nicht erforderlich ist, kann auf die Schaltbarkeit der Drosselstelle 18 verzichtet werden und eine feste Drosselstelle eingebaut werden. Dabei kann auch die Dimensionierung der kühlmittelseitigen Strömungsquerschnitte des Kabinenwärmetauschers 3 die Drosselfunktion übernehmen. In diesem Anwendungsfall ohne schaltbare Drossel muß der Thermostat 5 des großen Kühlmittelkreislaufs geöffnet werden, wenn die Kühlmittelenergie nicht vom Kabinenwärmetauscher 3 abgeführt wird. Im Gegensatz zur oben beschriebenen Optimalvariante mit schaltbarer Drossel bedeutet dies, daß die Abwärme nicht wahlweise auf die Kabine oder den Motor 1 konzentriert und erst in einigen seltenen Situationen unmittelbar an die Umgebung abgegeben wird. Aus Kostengründen kann es jedoch vorteilhaft sein, auf die Vorteile eines möglichst warmem Motorblocks zu verzichten.

Je mach Bauart des Thermostaten 5 kann es erforderlich sein, diesen nicht in der in Fig. 1 eingezeichneten Position zu belassen, sondern ihn an den Kühlmittelaustritt aus dem Motor zu setzen. Besonders bei extremer Reduktion des Kühlmittelmassenstromes durch den Kabinenwärmetauscher ist dann auch ohne zusätzlichen Temperatursensor sichergestellt, daß ein Überhitzen des Motors nicht auftritt.

Statt der Drosselstelle 18 zur Anpassung des Kühlmittelmassenstromes durch den Kabinenwärmetauscher kann auch eine Drehzahlvariation der Kühlmittelpumpe verwendet werden. Alternativ kann auch eine elektrische Pumpe hinzugezogen werden, bei der der Kühlmittelmassenstrom beispielsweise durch Ein- und Ausschalten sowie durch Umpolung oder Regelung angepaßt wird.

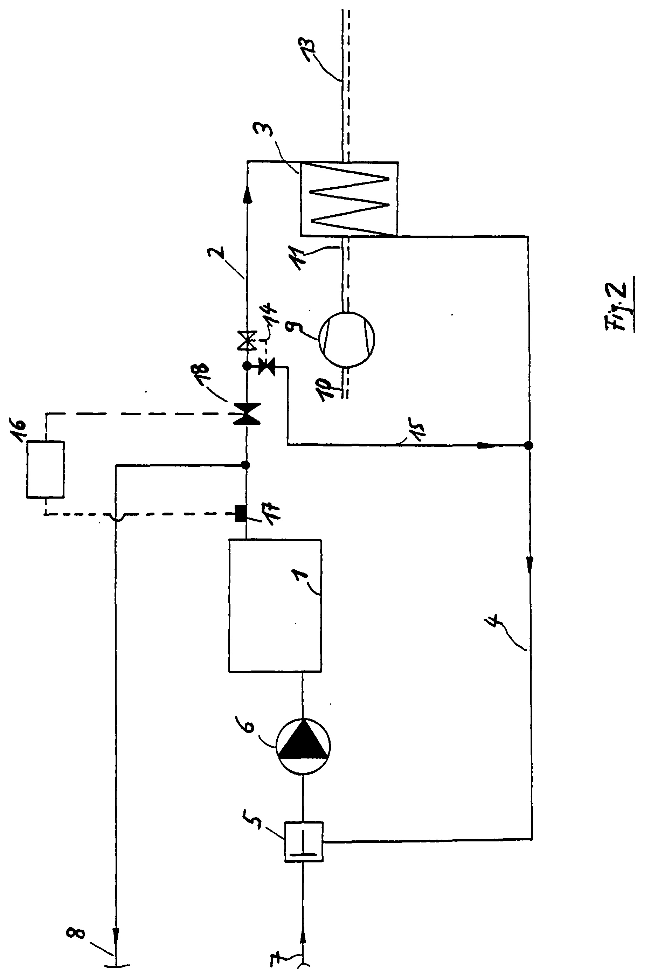

Fig. 2 zeigt einen entsprechenden Kreislauf mit kühlmittelseitiger Regelung. Hier öffnet die Regelklappe 14 den wasserseitigen Bypaß 15, um die an die Kabine abgegebene Wärmemenge zu reduzieren.

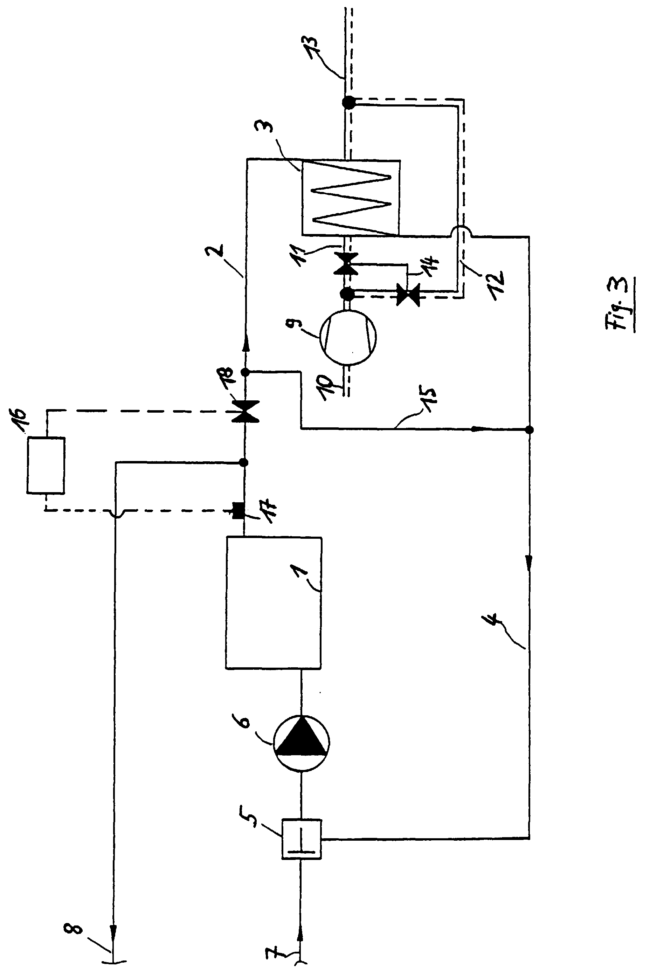

Bei dem in Fig. 3 gezeigten Kühlmittelkreislauf wird innerhalb des kleinen Kühlkreislaufs zusätzlich zur in Fig. 1 dargestellten Schaltung ein wasserseitiger Bypaß 15 vorgesehen, so daß nur ein Teil des im kleinen Kreislauf geförderten Kühlmittels über den Kabinenwärmetauscher strömt. Dies wird vorwiegend bei temperaturempfindlichen Motoren verwandt, um eine möglichst homogene Temperaturverteilung im Motorblock und im Zylinderkopf zu gewährleisten.

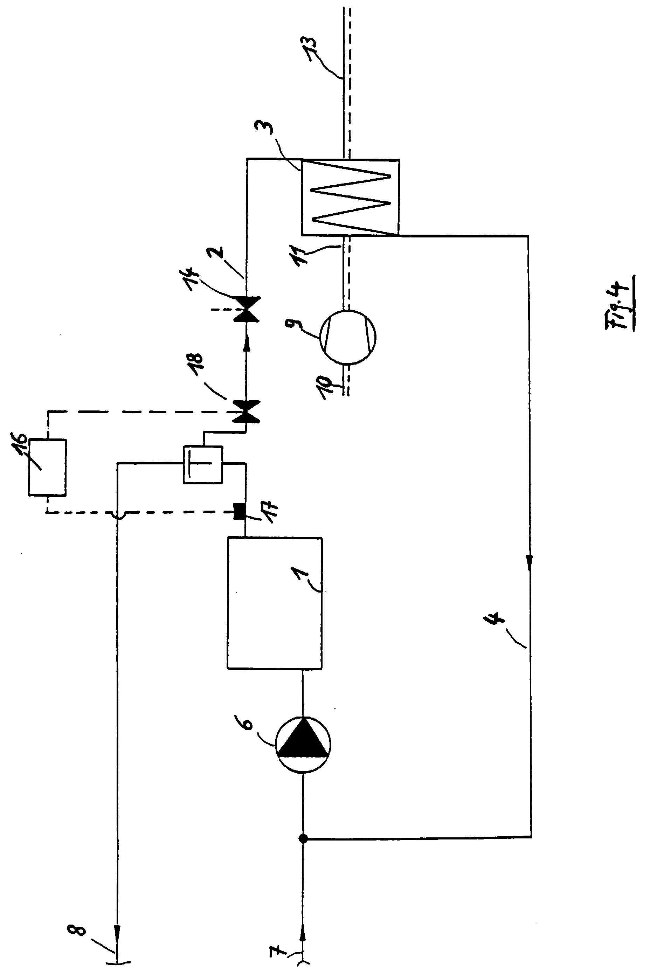

Die in Fig. 4 gezeigte Schaltung wird vorwiegend bei temperaturunempfindlichen Motoren mit entsprechender Ausgestaltung der motorseitigen Kühlmittelkanäle eingesetzt. Um die Heizleistung herabzusetzen, wird hier der Kühlmitteldurchsatz durch den Kabinenwärmetauscher reduziert und im Extremfall sogar blockiert.

Bei den in Fig. 1-4 gezeigten Ausführungsbeispielen kann der Thermostat 5 auch an der Abzweigung des großen Kühlkreislaufes (Leitung 8) am Motoraustritt sitzen.

Für Fig. 2 und Fig. 4 ist hier anzumerken, daß die Drosselstelle 18 durch eine entsprechende Ausgestaltung in die Regelklappe 14 integriert werden kann.

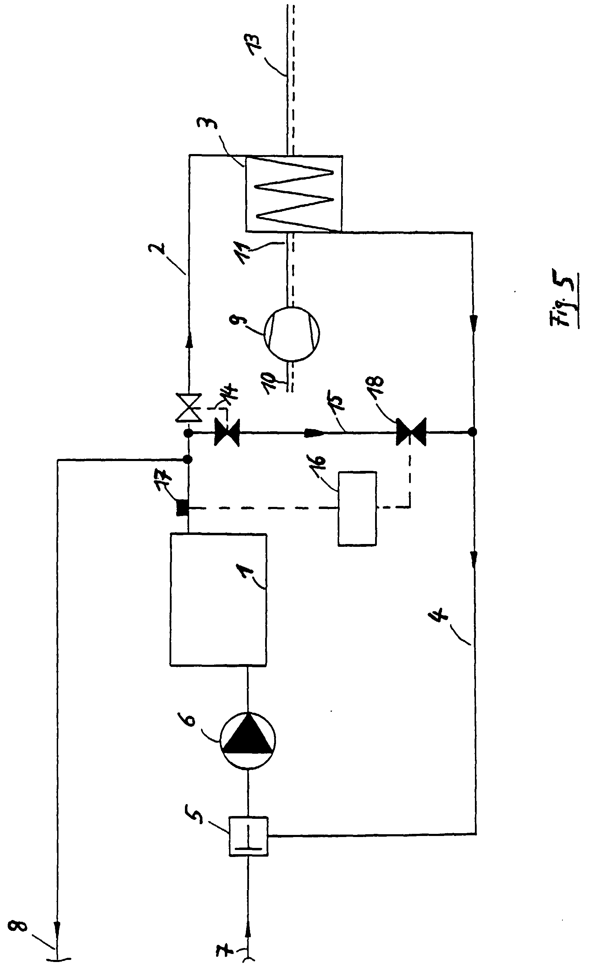

Eine andere Variante (Fig. 5) reduziert nur den Kühlmitteldurchsatz durch den Motor, indem der Bypaß 15 über die Drosselstelle 18 teilweise oder ganz verschlossen wird. Bei geeigneter Baugröße des Kabinenwärmetauschers 3 reduziert sich hierbei der Kühlmittelmassenstrom durch den Motor 1, während sich der Kühlmittelmassenstrom durch den Kabinenwärmetauscher 3 erhöht. Damit steigt die Kühlmitteltemperatur am Motoraustritt, aber auch die Wärmeverluste der Vorlaufleitung 2 an die Umgebung. Weiterhin liegt die Kühlmittelaustrittstemperatur aus dem Kabinenwärmetauscher 3 auf einem im Vergleich zur Optimalvariante erhöhten Niveau, was zusätzliche Wärmeverluste über Rücklaufleitung 4 und Motorblock bedeutet. Wird jedoch der Kühlmitteldurchsatz durch den Kabinenwärmetauscher 3 z. B. durch einen entsprechenden Druckverlust a priori auf einen wesentlich niedrigeren Wert festgelegt als bei heute üblichen Systemen mit Querstromkabinenwärmetauscher, so liegt die Kühlmitteltemperatur am Kabinenwärmetauscheraustritt auch nach der Erhöhung des Durchsatzes über das Schließen des Ventils 18 noch auf einem reduzierten Niveau. In Verbindung mit dem besseren Wärmenutzungsgrad in der Kabine, weiche aus der Erhöhung der Lufttemperatur am Kabinenwärmetauscheraustritt resultiert, bedeutet dies immer noch eine signifikante Steigerung der effektiven Heizleistung in der Kabine.

Umgekehrt ist es speziell bei Motoren, bei denen der Bypaß 15 sehr motornah oder gar motorintern angeordnet ist, manchmal auch günstiger, die Drosselstelle 18 nicht wie in Fig. 5 in den Bypaß 15 zu legen, sondern diese direkt in den durch den Kabinenwärmetauscher 3 führenden Leitungszweig, d. h. hinter die Regeldrossel 14, anzuordnen. Hierdurch ergibt sich eine unverändert gleichmäßige Temperaturverteilung innerhalb des Motors 1, was insbesondere bei hochbelasteten Motoren vorteilhaft ist, bei gleichzeitiger Reduktion der Wärmeverluste an die Umgebung. Wie bereits beschrieben betrifft diese Aussage die Kühlmittelleitungen ebenso wie die Vorteile bezüglich des Temperaturniveaus der in die Kabine geförderten Luft. Bei dieser Variante kann ganz besonders einfach auf eine nicht verstellbare Drosselung, insbesondere durch den Kabinenwärmetauscher bzw. die Kühlmittelleitungen, übergegangen werden. Dies ist insbesondere auch für die Anwendungen mit der Zusatzheizung 19 von besonderem Vorteil.

Oftmals dürfte anstelle der schaltbaren Drosselstelle eine selbstregelnde Drosselstelle einsetzbar sein, die bei geringem Kühlmittelmassenstrom, d.h. auch bei geringer Motordrehzahl, einen stärkeren relativen Druckabfall erzeugt als bei großer Drehzahl, wie z.B. eine federbelastete Rückschlagklappe, bevorzugt mit degressiver Federkennlinie.

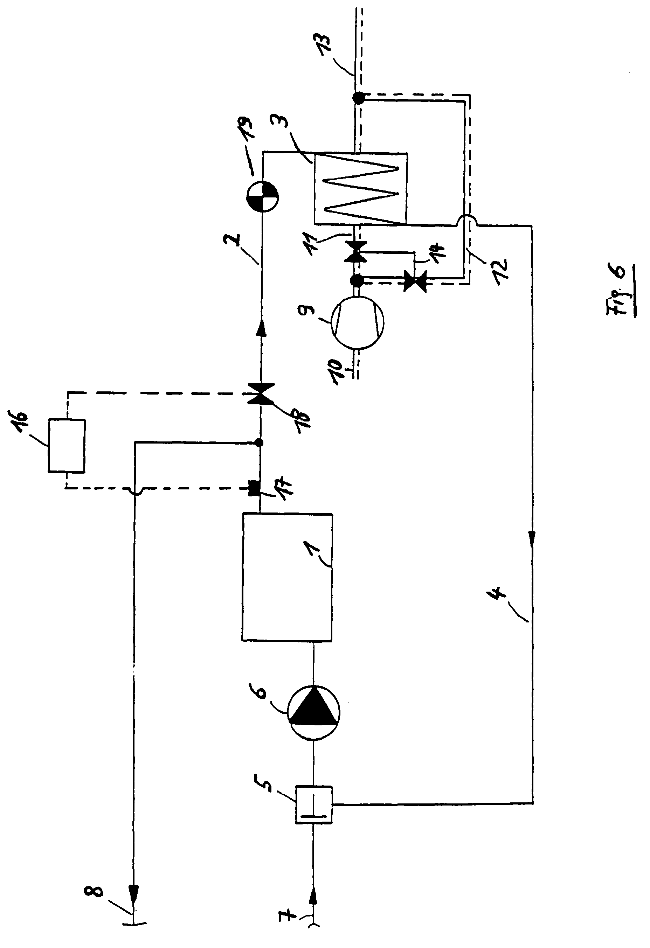

Fig. 6 zeigt eine Vorrichtung zur Beheizung einer Fahrgastkabine mit einer Zusatzheizung 19 unter Nutzung der Abwärme aus dem Motor 1. Das Kühlmittel wird vom Motor 1 über die Vorlaufleitung 2 in die Zusatzheizung 19 zum Kabinenwärmetauscher 3 und dann über die Rücklaufleitung 4, den Thermostaten 5 und die Kühlmittelpumpe 6 zurück zum Motor 1 gefördert. Die Zusatzheizung 19 kann hierbei z. B. aus einer mit flüssigem Kraftstoff betriebenen Einheit, einer elektrischen Heizwicklung oder aus einem Wärmespeicher bestehen.

Die Regelung der an die Kabine abgegebenen Wärme erfolgt durch das Ein- bzw. Ausschalten der Zusatzheizung 19 sowie über die Anpassung der mit Hilfe des Gebläses 9 von der Leitung 10 durch die Leitung 11 über den Kabinenwärmetauscher 3 und die Leitung 13 in die Kabine geförderten Luftmasse. Um die Heizleistung herabzusetzen kann neben der Reduzierung bzw. dem Abschalten der Wärmezufuhr über die Zusatzheizung 19 der Kühlmitteldurchsatz durch den Kabinenwärmetauscher 3 weitgehend reduziert oder blockiert werden. Auch bei Systemen mit Ein/Aus-Regelung der Zusatzheizung 19 wird die Reduktion des Luft- bzw. die Modifikation des Kühlmittelmassenstroms durch den Kabinenwärmetauscher 3 zur Anpassung der Leistungsabgabe in der Kabine eingesetzt.

Speziell bei Systemen, bei denen die Zusatzheizung 19 nur einen relativ kleinen Anteil der Heizleistung liefert, wäre eine gleichzeitige Reduktion des Kühlmitteldurchsatzes durch Zusatzheizung 19 und Kabinenwärmetauscher 3 zur Steigerung der Heizleistung in der Kabine bei betriebswarmen Motor 1 und eingeschalteter Zusatzheizung 19 ohne die erfindungsgemäßen Veränderungen uneffektiv, da sich die Luftaustrittstemperatur auch bei voller Zusatzheizleistung aufgrund des üblicherweise eingesetzten Querstromkabinenwärmetauschers nur wenig steigern ließe.

Es ist selbstverständlich, daß die Zusatzheizung 19 auch in den anderen erfindungsgemäßen Vorrichtungen gemäß den Fig. 1-4 einsetzbar ist.

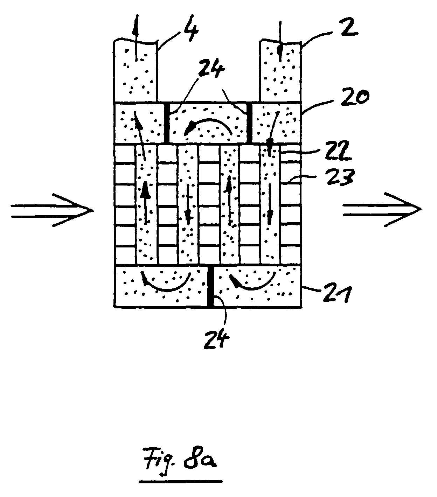

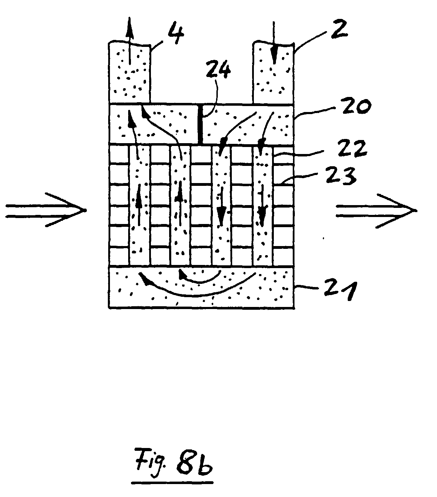

Für den Einbau in Kraftfahrzeugen eignet sich aus geometrischen Gründen und aufgrund der spezifischen Vorteile beim Einbau insbesondere eine Gegenstromwärmetauscherbauweise nach Fig. 8a, die durch Modifizierung eines konventionellen Kabinenwärmetauschers von der Querstrombauart nach Fig. 8b für hohe Wärmeübertragungsraten unter Erhöhung der Anzahl der Trennwände 7 innerhalb der Wasserkästen 20 und 21 von einer Trennwand auf drei erhältlich ist.

Bei richtigem Anschluß der Wasserzu- und -abfuhr 2 bzw. 4 aus Kühlmittelsystemen ist zwar bereits bel herkömmlichen Querstromwärmetauschern ein gewisser Gegenstromeffekt erzielbar, speziell die zweiflutige Führung der die beiden Wasserkästen 20 und 21 verbindenden kühlmittelführenden Wärmeübertragungsrohre 22, weiche die Wärme über die Kühlrippen 23 an die in die Kabine geförderte Luft übertragen, zeigt jedoch, daß in Richtung möglichst hoher Kühlmitteldurchsätze optimiert wurde. Durch eine einfache Modifikation des Gehäuses durch Erhöhung der innerhalb der Wasserkästen 20 und 21 vorgesehenen Trennwände 24 von einer Trennwand auf drei kann die Ausführungsform gemäß Fig. 8a erhalten werden.

Hieraus resultiert zwangsläufig eine Reduktion des Kühlmittelmassenstroms durch den Kabinenwärmetauscher 3 aufgrund einer Erhöhung des Druckverlustes. Durch die Verdoppelung der Strömungslauflänge sowie durch erhöhte Verwirbelungsverluste am Ein- und Austritt der Kühlmittelströmung in die einzelnen Wärmeübertragungsrohre 22 aufgrund einer erhöhten Strömungsgeschwindigkeit des Kühlmittels.

Je nach Ausgestaltung des kleinen Kühlmittelkreislaufs, mit bzw. ohne motornahem Kühlmittelbypass 15 parallel zum Kabinenwärmetauscher 3, erfolgt deshalb bei Einsatz des Kabinenwärmetauschers 3 nach Fig. 8a eine mehr oder weniger starke Zunahme des Förderdrucks der Kühlmittelpumpe 6. Zur genauen Anpassung des Kühlmittelstroms auf einen im Vergleich zu Werten bei herkömmlichen Querstromwärmetauschern stark reduziertem Niveau ist gegebenenfalls eine Anpassung der Kühlmittelleitungsquerschnitte bzw. der Wärmetauscherrohrquerschnitte vorzunehmen.

Weist der Motorkühlkreislauf einen kleinen Kühlkreislauf mit motornahem Kühlmittelbypass parallel zum Kabinenwärmetauscherkreislauf auf, kann der Einsatz des Kabinenwärmetauschers ohne Berücksichtigung von Querempfindlichkeiten bezüglich der Kühlung des Motors erfolgen, da bereits bei herkömmlichen Ausführungsformen der Extremzustand eines vollkommen blockierten Kühlmitteldurchsatzes durch den Kabinenwärmetauscher berücksichtigt ist. Bei der erfindungsgemäßen Festlegung des Kühlmitteldurchsatzes ist lediglich darauf zu achten, daß der Kühlmitteldurchsatz durch den Kabinenwärmetauscher im Bereich geringer Motorlast und Pumpendrehzahl genau so groß ist, daß ein ausreichender Transport von Wärmeenergie zum Kabinenwärmetauscher erfolgt und daß gleichzeitig die Lufttemperatur nicht zu stark im "Sättigungsbereich" liegt.

Offensichtlich sind die ursprünglichen Durchmesser der Kühlmittel Zu- und Abflußleitungen 2 und 4 bei starker Reduktion des Kühlmitteldurchsatzes überdimensioniert. Die Leitungsquerschnitte am Kabinenwärmetauscher bzw. an den Kühlmittelschläuchen sowie die Wandstärke der Schläuche können daher reduziert werden. Des weiteren sind gegenüber herkömmlichen Anordnungen sowohl die Abmessungen der Wärmeübertragungsrohre 22 als auch der Wärmeübertragungsrippen reduziert.

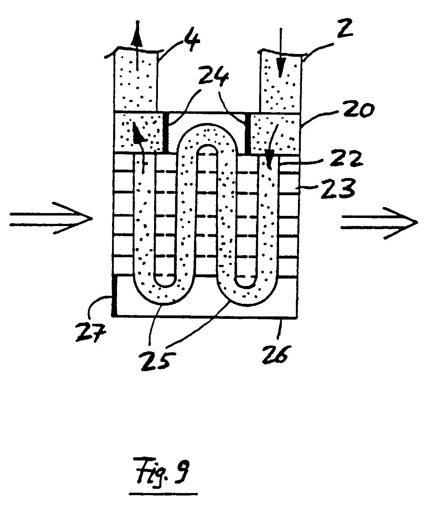

In der in Fig. 9 gezeigten Ausführungsform ist ein Wärmetauscher dargestellt, bei dem die Reihenschaltung der Querstromwärmetauscher über die parallel durchströmten Wärmetauseherrohre 22 in Verbindung mit halbkreisbogenähnlichen Strömungsumlenkungen 25 erfolgt, so daß die Kabinenluft auf diesem Wege in vier Stufen erwärmt sowie das Kühlmittel über die vier Stufen abgekühlt wird. Hierdurch erfolgt insbesondere eine Reduktion des kühlmittelseitigen Druckverlustes, da sich geringere Strömungsverluste am Ein- und Austritt in die Wärmeübertragungsrohre 22 ergeben. Dies ist beim erfindungsgemäßen Wärmetauscher von besonderer Bedeutung, da dieser je nach Anwendung eine relativ hohe Strömungsgeschwindigkeit des Kühlmittels in den Wärmeübertragungsrohren aufweist, so daß an einem Wärmetauscher nach Fig. 8a insbesondere an Unstetigkeitsstellen und an den Strömungsaustritten aus den einzelnen Wärmeübertragungsrohren 23 starke Impuls- und damit auch Druckverluste resultieren.

Weiterhin ist die mit Kühlmittel in Kontakt stehende Oberfläche des Wasserkastens 20 bzw. das mit Kühlmittel gefüllte Volumen bei der Ausführungsform nach Fig. 8a deutlich reduziert. Der Wasserkasten 21 nach Fig. 8a, b entfällt völlig und wird durch das im wesentlichen mit Luft in Kontakt stehende Gehäuse 26 ersetzt. Als Folge der besonderen Ausgestaltung des Wasserkastens 20 sowie des Gehäuses 9 ergibt sich eine weitere Reduktion der wärmeaktiven Masse. Durch eine spezielle Blende 27 kann die Durchströmung des Gehäuses 26 bei entsprechendem Biegeradius der Wärmeübertragungsrohre 22 verhindert werden.

Eine Fertigung eines erfindungsgemäßen Wärmetauschers kann dadurch erfolgen, daß in einem ersten Schritt alle parallel verlaufenden Wärmetauscherrohre 22 noch vor dem Biegen der halbkreisähnlichen Strömungsumlenkungen 25 mit der erforderlichen Berippung 23 versehen und erst dann die Wasserkästen 20 bzw. 21 angebracht werden. Hierdurch ist sichergestellt, daß keine Wärmeleitung entgegen der Strömungsrichtung innerhalb der Rippen 23 erfolgt.

Des weiteren weisen die Kühlmittelzu- und -rückflußleitungen in die Wasserkästen 20 und 21 zur Verbesserung des Strömungsverhaltens eine düsen- bzw. diffusorartige Zone innerhalb des Wasserkastens, wahlweise auch außerhalb desselben auf, so daß kühlwasserseitige Druckverluste im Kabinenwärmetauscher vermindert werden. Insbesondere im Zusammenhang mit der Reduktion der Strömungsquerschnitte der Kühlmittelleitungen sowie einer Erhöhung der Strömungsgeschwindigkeit in den Kühlmittelleitungen zur Minimierung der Wärmeverluste an die Umgebung und der wärmeaktiven Masse ist dies ebenso wie die Ausgestaltung der Wärmeübertragungsrohre 22 wie in Fig. 9 gezeigt, für die vorliegende Erfindung von wesentlicher Bedeutung.

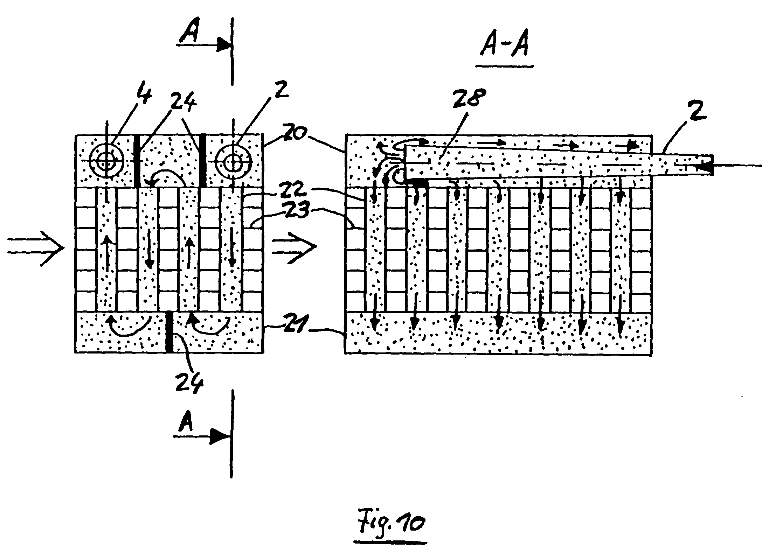

In Fig. 10 ist ein Kabinenwärmetauscher dargestellt, bei welchem die Kühlmittelzufuhr 2 und die Kühlmittelabfuhr 4 seitlich erfolgen und bei dem die Querschnitte der Leitungen innerhalb des Wasserkastens 20 erweitert sind. Die Querschnitte der Leitungen können auch außerhalb des Wasserkastens 20 erweitert sein.

Wie im Schnitt A-A verdeutlicht, wird das in den Wasserkasten 20 eingeleitete Kühlmittel durch einen Diffusor 28 weitgehend ablösungsfrei verzögert, so daß der dynamische Druck des in einem im Vergleich zu Fig. 8a wesentlich kleineren Schlauch und mit einer höheren Strömungsgeschwindigkeit strömenden Kühlmittels zumindest teilweise wieder zurückgewonnen wird. Aufgrund der geringen Strömungsgeschwindigkeit sind nicht nur die Ausströmverluste aus der Kühlmittelzufuhrleitung 2 relativ gering sondern auch die Strömungsverluste beim Verteilen des Kühlmittels auf die einzelnen Wärmetauscherrohre 22.

Bei der aus dem Wasserkasten 20 herausführenden Kühlmittelströmung ergeben sich in der das Kühlmittel sammelnden Rücklaufleitung 4, weiches die Strömung wieder auf die relativ hohe Geschwindigkeit innerhalb der Schlauchleitung beschleunigt, analoge Vorteile.

Je nach Raumbedarf und Öffnungswinkel der Düse bzw. des Diffusors 28 können zur Vermeidung von Strömungsablösungen die Vorlaufleitung 2 bzw. die Rücklaufleitung 4 perforiert sein.

Insgesamt ist mittels der erfindungsgemäßen Kabinenwärmetauscheranordnungen nahezu der Durchflußbeiwert eines Kabinenwärmetauschers in Querstrombauart mit doppelflutiger Kühlmittelführung nach herkömmlicher Bauweise erreichbar. Der erfindungsgemäße Kabinenwärmetauscher kann dadurch weiter verbessert werden, daß zusätzlich auch die Übergänge zu den vergleichsweise dicken Kühlmittelaustritts- und Rückflußleitungsquerschnitten am Motor düsen- bzw. diffusorartig ausgeführt sind. Auch diese Einsparung an Druckverlusten kann letztlich in eine weitere Reduktion der Leitungsquerschnitte umgesetzt werden.

Durch die Reihenschaltung einer größeren Anzahl von Querstromwärmetauschern läßt sich nahezu die gleiche Wirkung erzielen, wie mit einem konventionellen Gegenstromwärmetauscher.

Da alle vier in Fig. 8a, b gezeigten Wärmetauscherrohre 22 des Kabinenwärmetauschers 3 über gemeinsame Wärmeübertragungsrippen 23 verbunden sind, wird ein gewisser Anteil an Wärme durch Wärmeleitung in der Rippe entgegen der Luftströmung transportiert. Deshalb ist es zweckmaßig, die Wärmeübertragungsrippen 22 zumindest lokal zu unterbrechen oder lokal die Wandstärke dieser Rippen zu reduzieren. Hierbei kann die Beschränkung auf eine lokale Unterbrechung bzw. die Beschränkung auf eine lokale Reduktion der Wandstärke aus fertigungstechnischen Gründen vorteilhaft sein gegenüber einer Unterbrechung über die gesamte Rippenbreite.

Die angesprochenen Maßnahmen zur Verhinderung der Wärmeleitung entgegen der Luftströmung sind bevorzugt in der Mitte zwischen den einzelnen Fluten vorzunehmen. Als positive Begleiterscheinung wird durch diese Maßnahmen auch die Turbulenz der Luftströmung und damit der Wärmeübergang erhöht. Liegen verminderte Anforderungen bezüglich der Baugröße vor, so kann die Wärmeleitung natürlich auch durch eine Vergrößerung der Abstände zwischen den einzelnen Wärmetauscherrohren eingedämmt werden.

### Bezugszeichenliste

- 1: Motor
- 2: Vorlaufleitung
- 3: Kabinenwärmetauscher
- 4: Rücklaufleitung
- 5: Thermostat
- 6: Kühlmittelpumpe
- 7: Kühlmittelleitung
- 8: Kühlmittelleitung
- 9: Gebläse
- 10: Frischluftleitungen
- 11: Frischluftleitungen
- 12: Frischluftleitungen
- 13: Frischluftleitungen
- 14: Regelklappe
- 15: Bypass
- 16: Elektronik
- 17: Sensor
- 18: Drosselstelle
- 19: Zusatzheizung
- 20: Wasserkasten
- 21: Wasserkasten
- 22: Wärmeübertragungsrohr
- 23: Kühlrippe
- 24: Trennwand
- 25: Strömungsumlenkung
- 26: Gehäuse
- 27: Blende
- 28: Diffusor

## Patentansprüche

1. Verfahren zur Beheizung der Fahrgastkabine von Kraftfahrzeugen mit der Abwärme des Antriebsmotors (1) über das flüssige oder gasförmige Kühlmittel, welches zur Erwärmung der Fahrgastkabine in Kühlmittelleitungen über einen Kabinenwärmetauscher (3) und dann zurück zum Antriebsmotor (1) geleitet wird, **dadurch gekennzeichnet**, daß ein Kabinenwärmetauscher (3) mit Gegenstromcharakteristik verwendet wird und daß bei Unterschreitung der Soll-Temperatur in der Fahrgastkabine der Kühlmittelmassenstrom durch den Antriebsmotor (1) und/oder den Kabinenwärmetauscher (3) unter Steigerung der an die Fahrgastkabine abgegebenen Heizleistung zumindest zeitweise in Richtung auf ein durch die zulässigen Grenzwerte der Motorkühlung bestimmtes Maß reduziert wird, bis die Soll-Temperatur in der Fahrgastkabine erreicht wird.

2. Verfahren nach Anspruch 1, **dadurch gekennzeichnet**, daß lediglich der Kühlmittelmassenstrom durch den Antriebsmotor (1) reduziert und der Kühlmittelmassenstrom durch den Kabinenwärmetauscher (3) beibehalten oder erhöht wird, wobei der Kühlmittelmassenstrom durch den Antriebsmotor (1) mindestens um den Faktor 2 geringer ist als in entsprechenden Fahrsituationen ohne maximalen Heizleistungsbedarf in der Fahrgastkabine.

3. Verfahren nach den Ansprüchen 1 oder 2, **dadurch gekennzeichnet**, daß bei maximalem Heizleistungsbedarf in der Fahrgastkabine die Abwärme des Antriebsmotors (1) durch Reduzierung des Kühlmittelmassenstroms auf die Fahrgastkabine konzentriert wird und daß bei reduziertem Heizleistungsbedarf die Reduzierung des Kühlmittelmassenstroms unterbleibt, so daß ein erhöhter Anteil der Abwärme der Aufheizung des Motors (1) zugute kommt.

4. Verfahren nach einem der Ansprüche 1 - 3, **dadurch gekennzeichnet**, daß die Reduktion des Kühlmittelmassenstroms teilweise oder vollständig aufgehoben wird, sobald die Umgebungstemperatur einen bestimmten Grenzwert überschreitet.

5. Verfahren nach einem der Ansprüche 1 - 3, **dadurch gekennzeichnet**, daß die Reduktion des Kühlmittelmassenstromes nur im unteren bis mittleren Kennfeldbereich des Antriebsmotors (1) erfolgt und bei Überschreiten einer vorgebenen Nenndrehzahl oder eines vorgebenen Nenndrehmoments des Antriebsmotors (1) ausgeschaltet wird.

6. Verfahren nach einem der Ansprüche 1 - 3, **dadurch gekennzeichnet**, daß die Reduktion des Kühlmittelmassenstromes teilweise oder vollständig aufgehoben wird, sobald die Temperaturdifferenz des Kühlmittels zwischen Motoraustritt und Motoreintritt eine vorgegebene Obergrenze überschreitet.

7. Verfahren nach einem der Ansprüche 1 - 3, **dadurch gekennzeichnet**, daß die Reduktion des Kühlmittelmassenstromes teilweise oder vollständig aufgehoben wird, sobald die Temperatur des Kühlmittels am Austritt des Motors (1) eine vorgegebene Obergrenze überschreitet.

8. Verfahren nach einem der Ansprüche 1 - 3, **dadurch gekennzeichnet**, daß die Reduktion des Kühlmittelmassenstromes teilweise oder vollständig aufgehoben wird, sobald der Dampfdruck oder die Druckpulsation des Kühlmittels eine vorgegebene Obergrenze überschreitet.

9. Verfahren nach einem der Ansprüche 1 - 8, **dadurch gekennzeichnet**, daß die Reduktion des Kühlmittelmassenstromes über die Dimensionierung der Leitungsquerschnitte und/oder die Geometrie des Kabinenwärmetauschers (3) erfolgt und daß der Kühlmittelmassenstrom durch Öffnen und Schließen eines im großen Kühlmittelkreislauf angeordneten Thermostaten (5) geregelt wird.

10. Verfahren nach einem der Ansprüche 1 - 9, **dadurch gekennzeichnet**, daß der Kühlmittelmassenstrom solange reduziert wird, bis die Kühlmitteltemperatur am Austritt aus dem Kabinenwärmetauscher (3) eine vorgegebene Untergrenze erreicht.

11. Verfahren nach einem der Ansprüche 1 - 9, **dadurch gekennzeichnet**, daß der Kühlmittelmassenstrom solange reduziert wird, bis das Kühlmittel am Austritt aus dem Kabinenwärmetauscher (3) eine vorgegebene Temperaturdifferenz zur Motoraustrittstemperatur erreicht.

12. Verfahren nach einem der Ansprüche 1 - 11, **dadurch gekennzeichnet**, daß bei reduziertem Kühlmittelmassenstrom der Frischluftdurchsatz durch den Kabinenwärmetauscher (3) reduziert wird.

13. Verfahren nach Anspruch 12, **dadurch gekennzeichnet**, daß die Reduktion des Frischluftdurchsatzes durch den Kabinenwärmetauscher (3) nur dann erfolgt, wenn die Temperatur oder die Feuchtigkeit der Umgebungsluft einen bestimmten Grenzwert unterschreitet.

14. Verfahren nach Anspruch 12, **dadurch gekennzeichnet**, daß die Reduktion des Frischluftdurchsatzes durch den Kabinenwärmetauscher (3) nur dann erfolgt, wenn die Temperatur des Motors (1) oder die Temperatur des Kühlmittels am Eintritt des Kabinenwärmetauschers (3) einen bestimmten Grenzwert überschreitet.

15. Verfahren nach Anspruch 12, **dadurch gekennzeichnet**, daß die Reduktion des Frischluftdurchsatzes durch den Kabinenwärmetauscher (3) nur dann erfolgt, wenn die Feuchtigkeit der Kabinenluft einen bestimmten Grenzwert unterschreitet.

16. Verfahren nach einem der Ansprüche 1 - 15, **dadurch gekennzeichnet**, daß die Reduktion des Kühlmittelmassenstroms manuell außer Betrieb genommen wird.

17. Verfahren nach einem der Ansprüche 1 - 16 für Kraftfahrzeuge mit Elektromotor als Antrieb, **dadurch gekennzeichnet**, daß zumindest ein Teil der Heizleistung für die Fahrgastkabine aus der Regelung der elektrischen Antriebsleistung stammt.

18. Verfahren nach einem der Ansprüche 1 - 17, **dadurch gekennzeichnet**, daß das Kühlmittel zur Erwärmung der Fahrgastkabine über eine zusätzliche Wärmequelle (19) geführt wird.

19. Verfahren nach Anspruch 18, **dadurch gekennzeichnet**, daß bei maximalem Heizleistungsbedarf in der Fahrgastkabine die Abwärme des Antriebsmotors (1) und die von der zusätzlichen Wärmequelle (19) eingespeiste Wärme durch Reduzierung des Kühlmittelmassenstroms auf die Fahrgastkabine konzentriert wird und daß bei reduziertem Heizleistungsbedarf die Reduzierung des Kühlmittelmassenstroms unterbleibt, so daß ein erhöhter Anteil der Abwärme der Aufheizung des Motors (1) zugute kommt.

20. Verfahren nach Anspruch 19, **dadurch gekennzeichnet**, daß die Reduktion des Kühlmittelmassenstromes teilweise oder vollständig aufgehoben wird, sobald die Temperatur des Kühlmittels am Austritt des Motors (1) oder am Austritt der zusätzlichen Wärmequelle (19) eine vorgegebene Obergrenze überschreitet.

21. Verfahren nach Anspruch 19, **dadurch gekennzeichnet**, daß die Reduktion des Kühlmittelmassenstroms genau dann vorgenommen wird, wenn die zusätzliche Wärmequelle (19) Wärme an das Kühlmittel abgibt.

22. Verfahren nach einem der Ansprüche 18 - 21 für Kraftfahrzeuge mit Verbrennungsmotor als Antrieb, **dadurch gekennzeichnet**, daß als zusätzliche Wärmequelle (19) ein Abgas/Kühlmittelwärmetauscher Verwendung findet.

23. Vorrichtung zur Beheizung der Fahrgastkabine von Kraftfahrzeugen, insbesondere zur Durchführung des Verfahrens nach einem der Ansprüche 1 - 22, mittels der Abwärme des Antriebsmotors eines Kraftfahrzeuges, wobei Kühlmittelleitungen sowie ein Kabinenwärmetauscher vorgesehen sind und zur Erwärmung der Fahrgastkabine das Kühlmittel in den Kühlmittelleitungen über den Kabinenwärmetauscher und dann zurück zum Antriebsmotor führbar ist, **dadurch gekennzeichnet**, daß der Kabinenwärmetauscher (3) als Gegenstromwärmetauscher ausgeführt ist, der eine stufenweise oder kontinuierliche Erwärmung der Kabinenluft und eine stufenweise oder kontinuierliche Abkühlung des Kühlmittels ermöglicht, und daß Mittel zur Reduzierung des Kühlmittelmassenstroms durch den Antriebsmotor (1) und/ oder den Kabinenwärmetauscher (3) vorgesehen sind, wodurch die Heizleistung in der Fahrgastkabine erhöht wird.

24. Vorrichtung nach Anspruch 23, **dadurch gekennzeichnet**, daß Mittel vorgesehen sind, mittels derer bei Unterschreitung der Soll-Temperatur in der Fahrgastkabine der Kühlmittelmassenstrom durch den Antriebsmotor (1) und/oder den Kabinenwärmetauscher (3) reduzierbar ist.

25. Vorrichtung nach Anspruch 23 oder 24, **dadurch gekennzeichnet**, daß der Kabinenwärmetauscher (3) aus mindestens drei in Reihe geschalteten und voneinander abgegrenzten Tauscherbereichen aufgebaut ist, die jeweils für sich im wesentlichen eine Querstromcharakteristik aufweisen, und zwischen denen Mittel zur Strömungsumlenkung des Kühlmittelmassenstromes um jeweils 180° derart angeordnet sind, so daß die Kabinenluft in mindestens drei Stufen erwärmt und das Kühlmittel über diese drei Stufen abgekühlt wird.

26. Vorrichtung nach Anspruch 25, **dadurch gekennzeichnet**, daß die in Reihe geschalteten Tauscherbereiche in einem gemeinsamen Gehäuse (26) angeordnet sind, daß die Tauscherbereiche kühlmitteldurchströmte Rohrleitungen (22) sowie mit den Rohrleitungen und der Kabinenluft in Kontakt stehende Wärmetauscherrippen (23) aufweisen, so daß die Kabinenluft mittels der Wärmeübertragungsrippen (23) beheizbar ist.

27. Vorrichtung nach Anspruch 26, **dadurch gekennzeichnet**, daß für alle in Reihe geschalteten Tauscherbereiche gemeinsame Wärmeübertragungsrippen (23) zur Beheizung der Kabinenluft verwendet werden.

28. Vorrichtung nach Anspruch 26 oder 27, **dadurch gekennzeichnet**, daß die Wärmetauscherrippen (23) so ausgebildet sind, daß die Wärmeleitung entlang der Wärmeübertragungsrippen (23) entgegen der Strömungsrichtung der durch den Wärmetauscher geförderten Kabinenluft vermindert ist.

29. Vorrichtung nach Anspruch 28, **dadurch gekennzeichnet**, daß in den Wärmeübertragungsrippen (23) im Bereich zwischen den kühlmittelführenden Rohren (22) Aussparungen zur Unterbrechung der Wärmeleitung entgegen der Luftströmungsrichtung vorgesehen sind und/oder daß die Dicke der Wärmeübertragungsrippen (23) lokal reduziert ist und/oder daß der Abstand der kühlmittelführenden Rohre (22) zueinander so bemessen ist, daß die Wärmeleitung entgegen der Strömungsrichtung der durch den Wärmetauscher (3) geförderten Kabinenluft vernachlässigbar ist.

30. Vorrichtung nach einem der Ansprüche 23 - 29, **dadurch gekennzeichnet**, daß die Kühlmittelleitung (2) vom Motor (1) zum Kabinenwärmetauscher (3) zumindest teilweise einen wesentlich geringeren Strömungsquerschnitt aufweist, als die vom Kabinenwärmetauscher (3) zum Motor (1) führende Kühlmittelleitung (4).

31. Vorrichtung nach einem der Ansprüche 23 - 30, **dadurch gekennzeichnet**, daß die Kühlmittelleitung (2) vom Motor (1) zum Kabinenwärmetauscher (3) zumindest teilweise besser gegenüber der Umgebung isoliert ist, als die vom Kabinenwärmetauscher (3) zum Motor (1) führende Kühlmittelleitung (4).

32. Vorrichtung nach einem der Ansprüche 23 - 31, **dadurch gekennzeichnet**, daß der Innendurchmesser der am Kabinenwärmetauscher (3) angeschlossenen Kühlmittelleitungen (2, 4) bei Personenkraftwagen geringer als 11 mm ist.

33. Vorrichtung nach einem der Ansprüche 23 - 32, **dadurch gekennzeichnet**, daß im Nahbereich des Kühlmittelaustritts aus dem Motor (1) eine düsenartige, eine weitgehend ablösungsfreie Kühlmittelströmung ermöglichende Verringerung des Leitungsquerschnitts der Kühlmittelleitung vorliegt.

34. Vorrichtung nach einem der Ansprüche 23 - 33, **dadurch gekennzeichnet**, daß im Nahbereich des Kühlmitteleintritts in den Motor (1) und/oder in das Gehäuse der Kühlmittelpumpe (6) und/oder im Nahbereich des Wärmetauschereintritts eine diffusorartige, eine weitgehend ablösungsfreie Kühlmittelströmung ermöglichende Erweiterung des Leitungsquerschnitts der Kühlmittelleitung vorliegt.

35. Vorrichtung nach einem der Ansprüche 23 - 34, **dadurch gekennzeichnet**, daß die vom Motor (1) wegführende Kühlmittelleitung (2) in Wärmetausch mit dem Motoröl steht.

36. Vorrichtung nach einem der Ansprüche 23 - 35, **dadurch gekennzeichnet**, daß eine zusätzliche Wärmequelle (19) zur Beheizung der Fahrgastkabine vorgesehen ist und daß die Reduktion des Kühlmittelmassenstromes bei Wärmeabgabe von der zusätzlichen Wärmequelle (19) an das Kühlmittel erfolgt.

37. Vorrichtung nach Anspruch 36, **dadurch gekennzeichnet**, daß die Reduktion des Kühlmittelmassenstromes durch die zusätzliche Wärmequelle (19) und den Kabinenwärmetauscher (3) über die Dimensionierung der Kühlmittelleitungen und/oder die Geometrie des Kabinenwärmetauschers (3) erfolgt.

38. Vorrichtung nach Anspruch 36 oder 37, **dadurch gekennzeichnet**, daß die Wärmequelle (19) ein Abgas/Kühlmittelwärmetauscher ist.

39. Vorrichtung nach einem der Ansprüche 36 - 38, an einem Fahrzeug mit Verbrennungsmotor mit externer Abgasrückführung, **dadurch gekennzeichnet**, daß die Wärmequelle (19) ein Abgas/Kühlmittelwärmetauscher in der externen Abgasrückführung ist.

40. Vorrichtung nach einem der Ansprüche 36 - 38, **dadurch gekennzeichnet**, daß die Wärmequelle (19) ein kraftstoffbeheizter Brenner, eine elektrische Heizung oder ein Wärmespeicher ist.

41. Wärmetauscher zur Beheizung der Fahrgastkabine von Kraftfahrzeugen mit der Abwärme eines Antriebsmotors über das flüssige oder gasförmige Kühlmittel, insbesondere Wärmetauscher mit einer Mehrzahl von kühlmitteldurchströmten Wärmeübertragungsrohren, **dadurch gekennzeichnet**, daß der Wärmetauscher (3) eine Gegenstromcharakteristik aufweist und Mittel (24) zur Reduzierung des Kühlmittelmassenstroms durch den Wärmetauscher vorgesehen sind.

42. Wärmetauscher nach Anspruch 41, **dadurch gekennzeichnet**, daß der Wärmetauscher (3) aus mindestens drei in Reihe geschalteten und voneinander abgegrenzten Tauscherbereichen aufgebaut ist, die jeweils für sich im wesentlichen eine Querstromcharakteristik aufweisen, und zwischen denen Mittel zur Strömungsumlenkung des Kühlmittelmassenstromes um jeweils 180° derart angeordnet sind, so daß die Kabinenluft in mindestens drei Stufen erwärmt und das Kühlmittel über diese drei Stufen abgekühlt wird.

43. Wärmetauscher nach Anspruch 42, **dadurch gekennzeichnet**, daß die Tauscherbereiche jeweils mehrere parallel zueinander angeordnete Wärmeübertragungsrohre (22) aufweisen, daß die Wärmeübertragungsrohre (22) mindestens zwei halbkreisbogenähnliche Strömungsumlenkungen (25) aufweisen und daß die Kabinenluft auf diesem Wege in mindestens drei Stufen erwärmt sowie das Kühlmittel über diese drei Stufen abgekühlt wird.

44. Wärmetauscher nach Anspruch 42 oder 43, **dadurch gekennzeichnet**, daß die Wärmeübertragungsrohre (22) Wärmeübertragungsripppen (23) aufweisen und daß in den Wärmeübertragungsrippen (23) im Bereich zwischen den Wärmeübertragungsrohren (22) Aussparungen zur Unterbrechung der Wärmeleitung entgegen der Luftströmungsrichtung vorgesehen sind und/oder daß die Dicke der Wärmeübertragungsrippen lokal reduziert ist und/oder daß der Abstand der Wärmeübertragungsrohre zueinander so bemessen ist, daß die Wärmeleitung entgegen der Strömungsrichtung der durch den Wärmetauscher (3) geförderten Kabinenluft vernachlässigbar ist.

45. Wärmetauscher nach einem der Ansprüche 41 - 43, **dadurch gekennzeichnet**, daß der Wärmetauscher (3) einen Wasserkasten (20) aufweist und daß der Übergang zwischen dem Strömungsquerschnitt der Kühlmittelzuflußleitung (2) auf den Wasserkasten (20) zur Verteilung des Kühlmittels auf die einzelnen Wärmeübertragungsrohre (22) eine diffusorartige, eine weitgehend ablösungsfreie Strömung ermöglichende Erweiterung (28) des Rohrquerschnittes mit geringem Öffnungswinkel und/oder daß der Übergang vom Wasserkasten (20) auf den Strömungsquerschnitt der Kühlmittelabflußleitung (4) zur Vereinigung des aus den einzelnen Wärmeübertragungsrohren (22) stammenden Kühlmittels eine düsenartige, eine weitgehend ablösungsfreie Strömung ermöglichende Verringerung des Rohrquerschnittes aufweist.

## Claims

1. Process for heating the passenger compartments of motor vehicles by means of the waste heat given off by the engine (1) via the liquid or gaseous coolant, which is fed back to the engine (1) through coolant lines via a passenger compartment heat exchanger (3) in order to heat the passenger compartment, **characterised in that** a passenger compartment heat exchanger (3) with counterflow characteristics is used and that if the temperature in the passenger compartment drops below the target value the coolant mass flow through the engine (1) and/or the passenger compartment heat exchanger (3) is at least intermittently reduced towards a proportion determined by the permissible limit values of engine cooling while increasing the heating capacity provided for the passenger compartment until the target temperarature in the passenger compartment is reached.

2. Process as per Claim 1, **characterised in that** only the coolant mass flow through the engine (1) is reduced and the coolant mass flow through the passenger compartment heat exchanger (3) is retained or increased, the coolant mass flow through the engine (1) being lower by at least a factor of 2 than in corresponding driving situations without maximum heating capacity requirements in the passenger compartment.

3. Process as per Claim 1 or 2, **characterised in that** the waste heat of the engine (1) is concentrated on the passenger compartment by reducing the coolant mass flow in the event of a maximum heating capacity requirement in the passenger compartment and that the coolant mass flow is not reduced in the event of a reduced heating capacity requirement, So that a higher proportion of the waste heat is used for heating up the engine (1).

4. Process as per one of Claims 1 to 3, **characterised in that** the reduction of the coolant mass flow is partially or completely abolsihed as soon as the ambient temperature exceeds a certain limit value.

5. Process as per one of Claims 1 to 3, **characterised in that** the coolant mass flow is only reduced in the lower to middle range of the characteristic diagram of the engine (1) and is deactivated if a specified nominal rpm speed or specified nominal torque of the engine (1) is exceeded.

6. Process as per one of claims 1 to 3, **characterised in that** the reduction of the coolant mass flow is partially or completely abolished as soon as the temperature difference of the coolant between the engine outlet and the engine inlet exceeds a specified upper limit.

7. Process as per one of Claims 1 to 3, **characterised in that** the reduction of the coolant mass flow is partially or completely abolished as soon as the temperature of the coolant at the outlet of the engine (1) exceeds a specified upper limit.

8. Process as per one of Claims 1 to 3, **characterised in that** the reduction of the coolant mass flow is partially or completely overridden as soon as the vapour pressure or the pressure pulsation of the coolant exceeds a specified upper limit.

9. Process as per one of Claims 1 to 8, **characterised in that** the coolant mass flow is reduced by the dimensioning of the line cross-sections and/or via the geometry of the passenger compartment heat exchanger (3) and that the coolant mass flow is controlled by opening and closing a thermostat (5) located in the large cooling circuit.

10. Process as per one of Claims 1 to 9, **characterised in that** the coolant mass flow is reduced until the coolant temperature at the outlet from the passenger compartment heat exchanger (3) reaches a specified lower limit.

11. Process as per one of claims 1 to 9, **characterised in that** the coolant mass flow is reduced until the coolant at the outlet from the passenger compartment heat exchanger (3) reaches a specified temperature difference relative to the engine outlet temperature.

12. Process as per one of Claims 1 to 11, **characterised in that** the fresh-air flow through the passenger compartment heat exchanger (3) is reduced if the coolant mass flow is reduced.

13. Process as per Claim 12, **characterised in that** the fresh-air flow through the passenger compartment heat exchanger (3) is only reduced if the temperature or humidity of the ambient air drops below a certain limit value.

14. Process as per Claim 12, **characterised in that** the fresh-air flow through the passenger compartment heat exchanger (3) is only reduced if the temperature of the engine (1) or the temperature of the coolant at the inlet to the passenger compartment heat exchanger (3) exceeds a certain limit value.

15. Process as per Claim 12, **characterised in that** the fresh-air flow through the passenger compartment heat exchanger (3) is only reduced if the humidity of the passenger compartment air drops below a certain limit value.

16. Process as per one of Claims 1 to 15, **characterised in that** the reduction of the coolant mass flow is manually deactivated.

17. Process as per one of Claims 1 to 16 for motor vehicles driven by an electric motor, **characterised in that** at least a part of the heating capacity for the passenger compartment is generated by the control of the electric propulsion power.

18. Process as per one of Claims 1 to 17, **characterised in that** the coolant is routed via an additional heat source (19) to heat the passenger compartment.

19. Process as per Claim 18, **characterised in that** the waste heat of the engine (1) and the heat fed in by the additional heat source (19) is concentrated on the passenger compartment by reducing the coolant mass flow in the event of a maximum heating capacity requirement in the passenger compartment and that the coolant mass flow is not reduced in the event of a reduced heating capacity requirement, so that a greater proportion of the waste heat is used for heating up the engine (1).

20. Process as per Claim 19, **characterised in that** the reduction of the coolant mass flow is partially or completely abolished as soon as the temperature of the coolant at the outlet of the engine (1) or the outlet of the additional heat source (19) exceeds a specified upper limit.

21. Process as per Claim 19, **characterised in that** the coolant mass flow is reduced at exactly the same time as the additional heat source (19) transfers heat to the coolant.

22. Process as per one of Claims 18 to 21 for motor vehicles driven by a combustion engine, **characterised in that** an exhaust gas/coolant heat exchanger is used as the additional heat source (19).

23. Device for heating the passenger compartments of vehicles, especially for carrying out the process as per one of Claims 1 to 22, by means of the waste heat given off by the engine of a motor vehicle, where coolant lines and a passenger compartment heat exchanger are provided and the coolant in the coolant lines can be routed via the passenger compartment heat exchanger and then back to the driving engine in order to heat the passenger compartment, **characterised in that** the passenger compartment heat exchanger (3) is designed as a counterflow heat exchanger which enables phased or continuous heating of the passenger compartment air and phased or continuous cooling of the coolant, and that means are provided for reducing the coolant mass flow through the engine (1) and/or the passenger compartment heat exchanger (3) are provided, whereby the heating capacity in the passenger compartment is increased.

24. Device as per Claim 23, **characterized in that**, that means are provided by means of which at dropping of the target temperature within the passenger compartment the coolant mass flow through the engine (1) and/or the passenger compartment heat exchanger (3) is reduciable.

25. Device as per Claim 23 or 24, **characterised in that** the passenger compartment heat exchanger (3) consists of at least 3 heat exchanger areas connected in series and being separated from each other having for their own substantially a crossflow characteristic, and means for guiding the coolant mass flow each at 180° around are arranged between them in such a way that the compartment air being heated in at least 3 stages and the coolant cooled via these 3 stages.

26. Device as per Claim 25, **characterised in that** the series-connected heat exchanger areas are arranged in a common housing (26), that the cross-flow heat exchangers display pipes (22) through which the coolant flow and heat exchanger fins (23) in contact with the pipes and the passenger compartment air, so that the passenger compartment air can be heated by means of the heat exchanger fins (23).

27. Device as per claim 26, **characterised in that** common heat exchanger fins (23) are used to heat the passenger compartment air for all heat exchanger areas connected in series.

28. Device as per claim 26 or 27, **characterised in that** the heat exchanger fins (23) are designed in such a way that heat conduction along the heat exchanger fins (23) against the direction of flow of the passenger compartment air fed through the heat exchanger is reduced.

29. Device as per Claim 28, **characterised in that** recesses are provided in the heat exchanger fins (23) in the area between the pipes (22) conveying the coolant to interrupt heat conduction against the direction of air flow, and/or that the thickness of the heat exchanger fins (23) is locally reduced, and/or that the gap between the pipes (22) conveying the coolant is of such dimensions that the heat conduction against the direction of flow of the passenger compartment air fed through the heat exchanger (3) is negligible.

30. Device as per one of Claims 23 to 29, **characterised in that** the coolant line (2) from the engine (1) to the passenger compartment heat exchanger (3) at least partially displays a considerably smaller flow cross-section than the coolant line (4) leading from the passenger compartment heat exchanger (3) to the engine (1).

31. Device as per one of Claims 23 to 30, **characterised in that** the coolant line (2) from the engine (1) to the passenger compartment heat exchanger (3) is at least partially better insulated against the surrounding environment than the coolant line (4) leading from the passenger compartment heat exchanger (3) to the engine (1).

32. Device as per one of claims 23 to 31, **characterised in that** the inside diameter of the coolant lines (2, 4) connected to the passenger compartment heat exchanger (3) is less than 11 mm in passenger cars.

33. Device as per one of claims 23 to 32, **characterised in that** a nozzle-like reduction of the coolant line cross-section, which permits largely separation-tree coolant flow, is provided in the vicinity of the coolant outlet from the engine (1).

34. Device as per one of Claims 23 to 33, **characterised in that** a diffuser-like expansion of the coolant line cross-section, which permits largely separation-free coolant flow, is provided in the vicinity of the coolant inlet into the engine (1) and/or into the housing of the coolant pump (6) and/or in the vicinity of the heat exchanger inlet.

35. Device as per one of claims 23 to 34, **characterised in that** the coolant line (2) leading away from the engine (1) exchanges heat with the engine oil.

36. Device as per one of Claims 23 to 35, **characterised in that** an additional heat source (19) is provided to heat the passenger compartment and that the coolant mass flow is reduced when the additional heat source (19) transfers heat to the coolant.

37. Device as per Claim 36, **characterised in that** the coolant mass flow through the additional heat source (19) and the passenger compartment heat exchanger (3) is reduced via the dimensioning of the coolant lines and/or via the geometry of the passenger compartment heat exchanger (3).

38. Device as per claim 36 or 37, **characterised in that** the heat source (19) is an exhaust gas/coolant heat exchanger.

39. Device as per one of claims 36 to 38, for a vehicle with a combustion engine with external exhaust gas recirculation system, **characterised in that** the heat source (19) is an exhaust gas/coolant heat exchanger in the external exhaust gas recirculation system.

40. Device as per one of Claims 36 to 38, **characterised in that** the heat source (19) is a fuel-fired burner, an electric heating system or a heat accumulator.

41. Heat exchanger for heating the passenger compartments of motor vehicles by means of the waste heat given off by an engine via the liquid or gaseous coolant, in particular a heat exchanger with several heat exchanger pipes through which coolant flows, **characterised in that** the heat exchanger (3) has counterflow characteristics and that means (24) for reducing the coolant mass flow through the heat exchanger are provided.

42. Heat exchanger as per Claim 41, **characterized in that**, the heat exchanger (3) consists of at least three heat exchanger areas connected in series and being separated from each other having for their own substantially a cross flow characteristic, and means for guiding the coolant mass flow each at 180° around are arranged between them in such a way that the compartment air being heated in at least three stages and the coolant cooled via these three stages.

43. Heat exchanger as per Claim 42, **characterised in that** the heat exchanger areas each display several heat exchanger pipes (22) arranged parallel to one another, that the heat exchanger pipes (22) display at least two semicircular flow diverters (25) and that the passenger compartment air is heated in at least three stages and the coolant cooled via these three stages in this manner.

44. Heat exchanger as per Claim 42 or 43, **characterised in that** the heat exchanger pipes (22) display heat exchanger fins (23) and that recesses are provided in the heat exchanger fins (23) in the area between the heat exchanger pipes (22) in order to interrupt heat conduction against the direction of air flow, and/or that the thickness of the heat exchanger fins is locally reduced, and/or that the gap between the heat exchanger pipes is of such dimensions that the heat conduction against the direction of flow of the passenger compartment air fed through the heat exchanger (3) is negligible.

45. Heat exchanger as per one of Claims 41 to 43, **characterised in that** the heat exchanger (3) displays a radiator tank (20) and that the transition from the flow cross-section of the coolant feed line (2) to the radiator tank (20) displays a diffuser-like expansion (28) of the pipe cross-section with a small opening angle, which permits largely separation-free flow, in order to distribute the coolant to the individual heat exchanger pipes (22), and/or that the transition from the radiator tank (20) to the cross-section of the coolant return line (4) displays a nozzle-like reduction of the pipe cross-section, which permits largely separation-free flow, in order to combine the coolant originating from the individual heat exchanger pipes (22).

## Revendications

1. Procédé pour chauffer la cabine des passagers de véhicules automobiles avec la chaleur perdue du moteur d'entraînement (1) par l'intermédiaire du fluide de refroidissement liquide ou gazeux qui pour le chauffage de la cabine des passagers est guidé dans des canalisations du fluide de refroidissement en traversant un échangeur de chaleur (3) de la cabine, puis est renvoyé au moteur d'entraînement (1), caractérisé en ce qu'on utilise un échangeur de chaleur (3) de la cabine présentant une caractéristique à contre-courant, et que dans le cas où la température dans la cabine des passagers tombe au-dessous de la température de consigne, le courant massique du fluide de refroidissement traversant le moteur d'entraînement (1) et/ou l'échangeur de chaleur (3) de la cabine est réduit au mains par instants en direction d'une valeur déterminée par les valeurs limites admissibles du refroidissement du moteur, moyennant un accroissement de la puissance de chauffage délivrée à la cabine des passagers, jusqu'à ce que la température de consigne soit atteinte dans cette dernière.

2. Procédé selon la revendication 1, caractérisé en ce que seul le courant massique du fluide de refroidissement traversant le moteur d'entraînement (1) est réduit et que le courant massique du fluide de refroidissement traversant l'échangeur de chaleur (3) de la cabine est maintenu ou accru, le courant massique du fluide de refroidissement traversant le moteur d'entraînement (1) étant plus faible, au moins du facteur 2, que dans des situations correspondantes de conduite sans besoin maximum de puissance de chauffage dans la cabine des passagers.

3. Procédé selon les revendications 1 ou 2, caractérisé en ce que dans le cas d'un besoin maximum de puissance de chauffage dans la cabine des passagers, la chaleur perdue du moteur d'entraînement (1) est concentrée dans la cabine des passagers par réduction du courant massique du fluide de refroidissement et que, dans le cas d'un besoin réduit en puissance de chauffage, la réduction du courant massique du fluide de refroidissement est supprimée de sorte qu'un pourcentage accru de la chaleur perdue est utilisé pour le chauffage du moteur (1).

4. Procédé selon l'une des revendications 1-3, caractérisé en ce que la réduction du courant massique du fluide de refroidissement est supprimée partiellement ou complètement dès que la température ambiante dépasse une valeur limite déterminée.

5. Procédé selon l'une des revendications 1-3, caractérisé en ce que la réduction du courant massique du fluide de refroidissement s'effectue uniquement dans la gamme inférieure et jusqu'à la gamme moyenne de champ de caractéristiques du moteur d'entraînement (1) et est arrêtée lors du dépassement d'une vitesse de rotation prédéterminée ou d'un couple nominal prédéterminé du moteur d'entraînement (1).

6. Procédé selon l'une des revendications 1-3, caractérisé en ce que la réduction du courant massique du fluide de refroidissement est supprimée partiellement ou en totalité dès que la différence de température du fluide de refroidissement entre la sortie et l'entrée du moteur dépasse une limite supérieure prédéterminée.

7. Procédé selon l'une des revendications 1-3, caractérisé en ce que la réduction du courant massique du fluide de refroidissement est partiellement ou totalement supprimée dès que la température du fluide de refroidissement à la sortie du moteur (1) dépasse une limite supérieure prédéterminée.

8. Procédé selon l'une des revendications 1-3, caractérisé en ce que la réduction du courant massique du fluide de refroidissement est partiellement ou complètement supprimée dès que la pression de vapeur ou la pulsation de pression du fluide de refroidissement dépasse une limite supérieure prédéterminée.

9. Procédé selon l'une des revendications 1-8, caractérisé en ce que la réduction du courant massique du fluide de refroidissement s'effectue au moyen du dimensionnement des sections transversales de conduite et/ou de la géométrie de l'échangeur de chaleur (3) de la cabine et que le courant massique du fluide de refroidissement est réglé par ouverture et fermeture d'un thermostat (5) disposé dans le grand circuit du fluide de refroidissement.

10. Procédé selon l'une des revendications 1-9, caractérisé en ce que le courant massique du fluide de refroidissement est réduit jusqu'à ce que la température du fluide de refroidissement à la sortie de l'échangeur de chaleur (3) de la cabine atteigne une limite inférieure prédéterminée.

11. Procédé selon l'une des revendications 1-9, caractérisé en ce que le courant massique du fluide de refroidissement est réduit jusqu'à ce que le fluide de refroidissement à la sortie de l'échangeur de chaleur (3) de la cabine atteigne une température présentant une différence prédéterminée par rapport à la température de sortie du moteur.

12. Procédé selon l'une des revendication 1-11, caractérisé en ce que dans le cas d'un courant massique réduit du fluide de refroidissement, le débit d'air frais traversant l'échangeur de chaleur (3) de la cabine est réduit.

13. Procédé selon la revendication 12, caractérisé en ce que la réduction du débit d'air frais dans l'échangeur de chaleur (3) de la cabine s'effectue uniquement lorsque la température ou l'humidité de l'air ambiant tombe au-dessous d'une valeur limite déterminée.

14. Procédé selon la revendication 12, caractérisé en ce que la réduction du débit d'air frais traversant l'échangeur de chaleur (3) de la cabine est exécutée uniquement lorsque la température du moteur (1) ou la température du fluide de refroidissement à l'entrée de l'échangeur de chaleur (3) de la cabine dépasse une valeur limite déterminée.

15. Procédé selon la revendication 12, caractérisé en ce que la réduction du débit d'air frais dans L'échangeur de chaleur (3) de la cabine est exécutée uniquement lorsque l'humidité de l'air de la cabine tombe au-dessous d'une valeur limite déterminée.

16. Procédé selon les revendication 1-15, caractérisé en ce que la réduction du courant massique du fluide de refroidissement est mise hors service manuellement.

17. Procédé selon l'une des revendications 1 à 16, pour véhicules automobiles comportant un moteur électrique comme dispositif d'entraînement, caractérisé en ce qu'au mains une partie de la puissance thermique pour la cabine des passagers est tirée de la régulation de la puissance d'entraînement électrique.

18. Procédé selon l'une des revendications 1-17, caractérisé en ce que le fluide de refroidissement est guidé de manière à traverser une source de chaleur supplémentaire (19) pour chauffer la cabine des passagers.

19. Procédé selon la revendication 18, caractérisé en ce que dans le cas d'un besoin maximum de puissance de chauffage dans la cabine pour les passagers, la chaleur perdue du moteur d'entraînement (1) et la chaleur introduite par la source de chaleur supplémentaire (19), sort concentrées par réduction du courant massique du fluide de refroidissement, dans la cabine des passagers et que, dans le cas d'un besoin réduit en puissance de chauffage, la réduction du courant massique du fluide de refroidissement est supprimée de sorte qu'une partie accrue de la chaleur perdue sert à chauffer le moteur (1).

20. Procédé selon la revendication 19, caractérisé en ce que la reduction du courant massique du fluide de refroidissement est supprimée partiellement ou complètement dès que la température du fluide de refroidissement à la sortie du moteur (1) ou à la sortie de la source de chaleur supplémentaire (19) dépasse une limite supérieure prédéterminée.

21. Procédé selon la revendication 19, caractérisé en ce que la reduction du courant massique du fluide de refroidissement est réalisée exactement lorsque la source de chaleur supplémentaire (13) délivre de la chaleur au fluide de refroidissement.

22. Procédé selon l'une des revendications 18-21 pour véhicules automobiles comportant un moteur à combustion interne en tant que dispositif d'entraînement, caractérisé en ce qu'on utilise comme source supplémentaire de chaleur (19) un échangeur de chaleur gaz d'échappement/fluide de refroidissement.

23. Procédé pour chauffer la cabine des passagers de véhicules automobiles, notamment pour la mise en oeuvre du procédé selon l'une des revendications 1-22, au moyen de la chaleur perdue du moteur d'entraînement d'un véhicule automobile, dans lequel il est prévu des canalisations du fluide de refroidissement ainsi qu'un échangeur de chaleur de la cabine et pour le chauffage de la cabine des passagers, le fluide de refroidissement peut être introduit dans les canalisations du fluide de refroidissement par l'intermédiaire de l'échangeur de chaleur de la cabine, puis être renvoyé au moteur d'entraînement, caractérisé en ce que l'échangeur de chaleur (3) de la cabine est agencé sous la forme d'un échangeur de chaleur à contre-courant, qui permet un échauffement échelonné ou continu de l'air de la cabine et un refroidissement échelonné ou continu du fluide de refroidissement, et que des moyens sont prévus pour réduire le courant massique du fluide de refroidissement traversant le moteur d'entraînement (1) et/ou l'échangeur de chaleur (3) de la cabine, ce qui accroît la puissance de chauffage dans la cabine des passagers.

24. Dispositif selon la revendication 23, caractérisé en ce que des moyens sont prévus, à l'aide desquels, dans le cas où la température dans la cabine des passagers tombe au-dessous de la température de consigne, le courant massique du fluide de refroidissement traversant le moteur d'entraînement (1) et/ou l'échangeur de chaleur (3) de la cabine peut être réduit.

25. Dispositif selon la revendication 23 ou 24, caractérisé en ce que l'échangeur de chaleur (3) de la cabine est constitué par au mains trois parties d'échangeur, qui sont branchées en série et délimitées les unes par rapport aux autres et qui possèdent chacune essentiellement une caractéristique d'écoulement transversal et entre lesquelles des moyens pour dévier l'écoulement du courant massique du fluide de refroidissement de respectivement 180° sont disposes de telle sorte que l'air de la cabine est chauffé dans au moins trois étages et que le fluide de refroidissement est refroidi au moyen de ces trois étages.

26. Dispositif selon la revendication 25, caractérisé en ce que les parties d'échangeur branchées en série sont disposées dans un boîtier commun (26), que les parties d'échangeur possèdent des conduites tubulaires (22) parcourues par le fluide de refroidissement ainsi que des ailettes d'échange thermique (23) qui sont en contact avec les conduites tubulaires et l'air de la cabine de sorte que l'air de l'air de la cabine peut être chauffé à l'aide des ailettes de transfert thermique (23).

27. Dispositif selon la revendication 26, caractérisé en ce que les ailettes communes de transfert thermique (23) sont utilisées pour le chauffage de l'air de la cabine, pour toutes les parties d'échangeur montées en série.

28. Dispositif selon la revendication 26 ou 27, caractérisé en ce que les ailettes (23) de l'échangeur de chaleur sont agencées de telle sorte que la conduction thermique le long des ailettes de transfert thermique (23) est réduite en sens opposé de la direction de circulation de l'air de la cabine qui est entraîné à travers l'échangeur de chaleur.

29. Dispositif selon la revendication 28, caractérisé en ce que des évidements servant à supprimer la conduction thermique en sens opposé à la direction de circulation d'air sont prévus dans les ailettes de transfert thermique (23) dans la zone située entre les tubes (22) véhiculant le fluide de refroidissement et/ou que l'épaisseur des ailettes de transfert thermique (23) est réduite localement et/ou que la distance des tubes (22) véhiculant le fluide de refroidissement sont dimensionnées les unes par rapport aux autres de manière que la conduction thermique en sens inverse de la direction de circulation de l'air de la cabine entraîné à travers l'échangeur de chaleur (3) est négligeable.

30. Dispositif selon l'une des revendications 23-29, caractérisé en ce que la canalisation (2) du fluide de refroidissement sortant du moteur (1) et aboutissant à l'échangeur de chaleur (3) de la cabine possède au moins en partie une section transversale d'écoulement nettement plus faible que la canalisation (4) du fluide de refroidissement qui relie l'échangeur de chaleur (3) de la cabine au moteur (1).

31. Dispositif selon l'une des revendications 23-30, caractérisé en ce que la canalisation (2) du fluide de refroidissement, qui relie le moteur (1) à l'échangeur de chaleur (3) de la cabine, est au moins en partie mieux isolée vis-à-vis de l'environnement que ne l'est la canalisation (4) du fluide de refroidissement qui s'étend de l'échangeur de chaleur (3) de la cabine jusqu'au moteur (1).

32. Dispositif selon l'une des revendications 23-31, caractérisé en ce que le diamètre intérieur des canalisations de fluide de refroidissement (2, 4) raccordées à l'échangeur de chaleur (3) de la cabine est inférieur à 11 mm dans le cas de voitures de tourisme.

33. Dispositif selon l'une des revendications 23-32, caractérisé en ce qu'un rétrécissement en forme de buse, qui permet une circulation dans une large mesure sans détachement du fluide de refroidissement, de la section transversale de la canalisation du fluide de refroidissement est présent à proximité de la sortie du fluide de refroidissement du moteur (1).

34. Dispositif selon l'une des revendications 23-33, caractérisé en ce qu'un élargissement en forme de diffuseur, qui permet une circulation dans une large mesure sans détachement du fluide de refroidissement, de la section transversale de la canalisation du fluide de refroidissement est présent à proximité de l'entrée du fluide de refroidissement dans le moteur (1) et/ou dans le carter de la pompe (6) du fluide de refroidissement et/ou à proximité de l'entrée de l'échangeur de chaleur.

35. Dispositif selon l'une des revendications 23-34, caractérisé en ce que la canalisation (22) du fluide de refroidissement, qui part du moteur (1), est en relation d'échange thermique avec l'huile du moteur.

36. Dispositif selon l'une des revendications 23-25, caractérisé en ce qu'une source de chaleur supplémentaire (19) est prévue pour le chauffage de la cabine des passagers et que la réduction du courant massique du fluide de refroidissement s'effectue lors de l'évacuation de chaleur depuis la source de chaleur supplémentaire (19) en direction du fluide de refroidissement.

37. Dispositif selon la revendication 36, caractérisé en ce que la réduction du courant massique du fluide de refroidissement à travers la source de chaleur supplémentaire (19) de l'échangeur de chaleur (3) de la cabine s'effectue au moyen du dimensionnement des canalisations du fluide de refroidissement et/ou de la géométrie de l'échangeur de chaleur (3) de la cabine.

38. Dispositif selon les revendications 36 ou 37, caractérisé en ce que la source de chaleur (19) est un échangeur de chaleur gaz d'échappement/fluide de refroidissement.

39. Dispositif selon les revendications 36-38, installé dans un véhicule comportant un moteur à combustion interne avec renvoi externe des gaz d'échappement, caractérisé en ce que la source de chaleur (19) est un échangeur de chaleur gaz d'échappement/fluide de refroidissement dans le système externe de renvoi des gaz d'échappement.

40. Dispositif selon l'une des revendications 36-38, caractérisé en ce que la source de chaleur (19) est un brûleur chauffé par le carburant, un dispositif de chauffage électrique ou un accumulateur de chaleur.

41. Echangeur de chaleur pour chauffer la cabine des passagers de véhicules automobiles avec la chaleur perdue d'un moteur d'entraînement par l'intermédiaire du fluide de refroidissement liquide ou gazeux, notamment échangeur de chaleur comportant une multiplicité de tubes de transfert de chaleur parcourus par un fluide de refroidissement, caractérisé en ce que l'échangeur de chaleur (3) possède une caractéristique de contre-courant et que des moyens (24) sont prévus pour réduire le courant massique du fluide de refroidissement traversant l'échangeur de chaleur.

42. Echangeur de chaleur selon la revendication 41, caractérisé en ce que l'échangeur de chaleur (3) de la cabine est constitué par au mains trois parties d'échangeur, qui sont branchées en série et délimitées les unes par rapport aux autres et qui possèdent chacune essentiellement une caractéristique d'écoulement transversal et entre lesquelles des moyens pour dévier l'écoulement du courant massique du fluide de refroidissement de respectivement 180° sont disposés de telle sorte que l'air de la cabine est chauffé dans au moins trois étages et que le fluide de refroidissement est refroidi au moyen de ces trois étages.

43. Echangeur de chaleur selon la revendication 42, caractérisé en ce que les parties de l'échangeur comportent chacune plusieurs tubes de transfert thermique (22) disposés parallèlement entre eux, que les tubes de transfert thermique (22) possèdent au moins deux déviations d'écoulement (25) en forme de demi-arc de cercle et que l'air de la cabine est de cette manière chauffé dans au moins trois étages et le fluide de refroidissement est refroidi par l'intermédiaire de ces trois étages.

44. Echangeur de chaleur selon la revendication 42 ou 43, caractérisé en ce que les tubes de transfert thermique (22) possèdent des nervures de transfert thermique (23) et que des évidents pour interrompre la conduction thermique en sens inverse de la direction de circulation de l'air sont prévus dans les ailettes de transfert thermique (23) dans la zone située entre les tubes de transfert thermique (22) et/ou que l'épaisseur des ailettes de transfert thermique est réduite localement et/ou que la distance réciproque des tubes de transfert thermique est dimensionnée de telle sorte que la conduction thermique en sens opposé de la direction de circulation de l'air de la cabine entraîné à travers l'échangeur de chaleur (3) est négligeable.

45. Echangeur de chaleur selon l'une des revendications 41-43, caractérisé en ce que l'échangeur de chaleur (3) comporte une boîte à eau (20), et que la jonction entre la section transversale de circulation de la canalisation (2) d'amenée du fluide de refroidissement à la boîte à eau (20) pour la distribution du fluide de refroidissement aux tubes individuels de transfert thermique (22) possède un élargissement (28) en forme de diffuseur, qui permet une circulation dans une large mesure sans détachement, de la section transversale du tube avec un faible angle d'ouverture et/ou que l'agencement de la boîte à eau (20) avec la section transversale de circulation de la canalisation (4) d'évacuation du fluide de refroidissement pour l'épuration du fluide de refroidissement provenant des différents tubes de transfert thermique (22) comporte un rétrécissement en forme de buse, qui permet un écoulement dans une large mesure sans détachement, de la section transversale du tube.
